(19) Europäisches Patentamt
European Patent Office
Office européen des brevets

(11) EP 4 293 050 A1

(12) **EUROPEAN PATENT APPLICATION**
published in accordance with Art. 153(4) EPC

(43) Date of publication:
**20.12.2023 Bulletin 2023/51**

(21) Application number: **22752748.8**

(22) Date of filing: **08.02.2022**

(51) International Patent Classification (IPC):
***C08C 19/26*** *(2006.01)* ***C08C 19/02*** *(2006.01)*
***C08L 15/00*** *(2006.01)* ***C08L 29/04*** *(2006.01)*

(52) Cooperative Patent Classification (CPC):
**C08C 19/02; C08C 19/26; C08L 15/00; C08L 29/04**

(86) International application number:
**PCT/JP2022/004954**

(87) International publication number:
**WO 2022/172925 (18.08.2022 Gazette 2022/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.02.2021 JP 2021021143**

(71) Applicant: **Kuraray Co., Ltd.**
**Kurashiki-shi, Okayama 710-0801 (JP)**

(72) Inventors:
- **FUKUHARA, Tadahito**
  **Tsukuba-shi, Ibaraki 305-0841 (JP)**
- **INATOMI, Atsushi**
  **Tsukuba-shi, Ibaraki 305-0841 (JP)**
- **KARAKIDA, Takuro**
  **Tsukuba-shi, Ibaraki 305-0841 (JP)**
- **OHTA, Satomi**
  **Kamisu-shi, Ibaraki 314-0197 (JP)**
- **TOSHINARI, Kenta**
  **Tokyo 100-0004 (JP)**
- **FUJITA, Akio**
  **Tsukuba-shi, Ibaraki 305-0841 (JP)**

(74) Representative: **Müller-Boré & Partner Patentanwälte PartG mbB**
**Friedenheimer Brücke 21**
**80639 München (DE)**

# (54) HYDROGENATED POLYMER COMPOSITION CONTAINING HYDROGENATED CONJUGATED-DIENE MODIFIED POLYMER HAVING BORON-CONTAINING FUNCTIONAL GROUP, AND METHOD FOR PRODUCING SAME

(57) Provided are a production method by which a hydrogenated conjugated diene modified polymer having a boron-containing functional group suitable for modification of various materials such as modification of a polar material and dispersion of an inorganic material can be obtained in high yield, and a hydrogenated polymer composition which contains a hydrogenated conjugated diene modified polymer having a boron-containing functional group, and which achieves both high reactivity with various polar functional groups and dispersibility in thermoplastic polymers, typically a vinyl alcohol-based polymer. The method is for producing a hydrogenated polymer composition including a hydrogenated conjugated diene modified polymer that has a boron-containing functional group, the method including: a step (1) of anionically polymerizing a monomer including a conjugated diene in the presence of a reactive metal or reactive metal compound capable of causing anionic polymerization to produce a reactive terminal polymer (Z); a step (2) of reacting the reactive terminal polymer (Z) obtained in the step (1) with a boric acid compound that has at least two partial structures represented by Formula (I), and in which at least one R bonded to an oxygen atom in the partial structure (I) has a Taft's steric parameter Es value of -0.30 or less to obtain an unhydrogenated conjugated diene modified polymer having a boron-containing functional group; and a step (3) of hydrogenating at least some of carbon-carbon double bonds contained in conjugated diene units included in the unhydrogenated conjugated diene modified polymer obtained in the step (2).

B-O-R (I)

(In Formula (I), B represents a boron atom, O represents an oxygen atom, and R represents an organic group.)

EP 4 293 050 A1

## Description

### Technical Field

The present invention relates to a hydrogenated polymer composition containing a hydrogenated conjugated diene modified polymer having a boron-containing functional group, and a method for producing the same.

### Background Art

Methods for synthesizing polymers having various functional groups at the terminal by anionic polymerization have been studied. For example, a method for introducing a boronic acid group, which is an example of a boron-containing functional group, to a polymer terminal has been studied, and it has been revealed that a polymer having a boronic acid group or a borinic acid group as a boron-containing functional group at the terminal is useful as a resin modifier such as a compatibilizer for a thermoplastic resin having a side-chain hydroxyl group such as an ethylene-vinyl alcohol copolymer (see Patent Literature 1).

### Citation List

### Patent Literature

Patent Literature 1: JP H07-25918 A

### Summary of Invention

### Technical Problem

Specifically, in Patent Literature 1, studies are made to obtain a hydrogenated conjugated diene modified polymer having a boronic acid at the terminal by reacting trimethyl borate with the terminal of an anionic polymerization reactive terminal polymer having structural units derived from a conjugated diene (hereinafter, also referred to as "conjugated diene units"), and then performing hydrogen addition (hereinafter, also referred to as hydrogenation) of at least some of carbon-carbon double bonds contained in the conjugated diene units. However, according to the study of the present inventors, it has been found that although a hydrogenated conjugated diene modified polymer having a boronic acid at the terminal can be obtained by the production method of Patent Literature 1, the reactivity of the borate ester is not sufficient in the production method, and a large amount of unmodified polymer having no boronic acid group may be contained. Thus, even if, for example, resin modification is performed using the polymer obtained in Patent Literature 1, since the proportion of the polymer having a boronic acid group is small, there are many polymers that cannot react with the polymer having a group reactive with a boronic acid group, and problems such as insufficient graft efficiency, insufficient dispersibility in the resin, and an increase of bleed-out components may occur.

The present invention has been made in view of the above circumstances, and it is an object of the present invention to provide a production method by which a hydrogenated conjugated diene modified polymer having a boron-containing functional group suitable for modification of various materials such as modification of a polar material and dispersion of an inorganic material can be obtained in high yield, and a hydrogenated polymer composition which contains a hydrogenated conjugated diene modified polymer having a boron-containing functional group, and which has high reactivity with various polar functional groups and excellent dispersibility in thermoplastic polymers, typically a vinyl alcohol-based polymer.

### Solution to Problem

As a result of intensive studies, the present inventors have found that in the step of producing a hydrogenated conjugated diene modified polymer having a boron-containing functional group, functional group modification is performed using an anionic polymerization reactive terminal polymer containing predetermined conjugated diene units and a boric acid compound satisfying a predetermined parameter, and at least some of carbon-carbon double bonds contained in the conjugated diene units are hydrogenated, whereby a desired hydrogenated conjugated diene modified polymer is obtained in high yield. Furthermore, the present inventors have found that a specific hydrogenated polymer composition containing a hydrogenated conjugated diene modified polymer containing a predetermined boronate ester group and a hydrogenated conjugated diene modified polymer containing a predetermined borinic acid group has reactivity to polar functional groups and excellent dispersibility in thermoplastic polymers, typically a vinyl alcohol-based polymer, and have completed the present invention.

That is, the present invention provides the following [1] to [5].

[1] A method for producing a hydrogenated polymer composition including a hydrogenated conjugated diene modified polymer that has a boron-containing functional group, the method including: a step (1) of anionically polymerizing a monomer including a conjugated diene in a presence of a reactive metal or reactive metal compound capable of causing anionic polymerization to produce a reactive terminal polymer (Z); a step (2) of reacting the reactive terminal polymer (Z) obtained in the step (1) with a boric acid compound that has at least two partial structures represented by Formula (I), and in which at least one R bonded to an oxygen atom in the partial structure has a Taft's steric parameter Es value of -0.30 or less to obtain an unhydrogenated conjugated diene modified polymer having a boron-containing functional group; and a step (3) of hydrogenating at least some of carbon-carbon double bonds contained in conjugated diene units included in the unhydrogenated conjugated diene modified polymer obtained in the step (2).

B-O-R (I)

(In Formula (I), B represents a boron atom, O represents an oxygen atom, and R represents an organic group.)
[2] The method for producing a hydrogenated polymer composition according to [1], in which the boric acid compound is mixed with a polar compound and then added to the reactive terminal polymer (Z) to be reacted, in the step (2).
[3] A hydrogenated polymer composition including: 65 to 99% by mass of at least one boronic acid-based hydrogenated conjugated diene modified polymer (A) selected from the group consisting of a hydrogenated conjugated diene modified polymer containing a boronic acid group represented by Formula (II), a hydrogenated conjugated diene modified polymer containing a boronate ester group represented by Formula (III), and a hydrogenated conjugated diene modified polymer containing a boronic acid salt group represented by Formula (IV); and 1 to 35% by mass of at least one borinic acid-based hydrogenated conjugated diene modified polymer (B) selected from the group consisting of a hydrogenated conjugated diene modified polymer containing a borinic acid group represented by Formula (V) or (VI), a hydrogenated conjugated diene modified polymer containing a borinate ester group represented by Formula (VII) or (VIII), and a hydrogenated conjugated diene modified polymer containing a borinic acid salt group represented by Formula (IX) or (X).

[Chemical Formula 1]

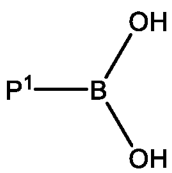 (II) 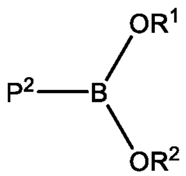 (III) 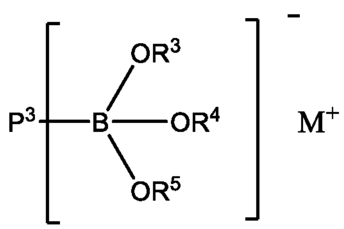 (IV)

(In the above Formula, $P^1$, $P^2$, and $P^3$ each represent a polymer chain containing hydrogenated conjugated diene units, $R^1$ and $R^2$ each independently represent a hydrogen atom or an alkyl group having 1 to 12 carbon atoms, at least one of $R^1$ or $R^2$ represents an alkyl group having 1 to 12 carbon atoms, or $R^1$ and $R^2$ are bonded to form an alkylene chain having 2 to 24 carbon atoms, $R^3$, $R^4$, and $R^5$ each independently represent a hydrogen atom, an alkyl group having 1 to 12 carbon atoms, or a polymer chain containing hydrogenated conjugated diene units, and at least one of $R^3$, $R^4$, or $R^5$ represents an alkyl group having 1 to 12 carbon atoms or a polymer chain containing hydrogenated conjugated diene units, or $R^3$ and $R^4$, $R^3$ and $R^5$, or $R^4$ and $R^5$ may be bonded to form an alkylene chain having 2 to 24 carbon atoms, or $R^3$, $R^4$, and $R^5$ may be bonded to form a trivalent saturated hydrocarbon chain having 3 to 36 carbon atoms. M represents one alkali metal or 1/2 alkaline earth metal.)

[Chemical Formula 2]

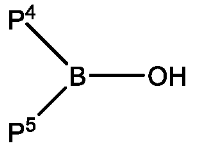

(V)

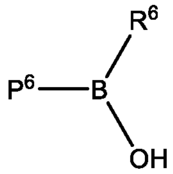

(VI)

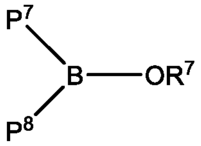

(VII)

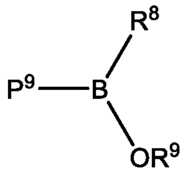

(VIII)

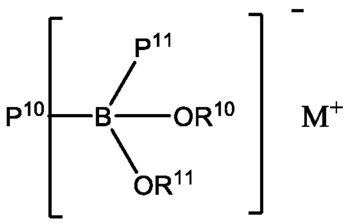

(IX)

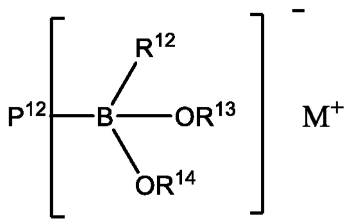

(X)

(In the above Formula, $P^4$, $P^5$, $P^6$, $P^7$, $P^8$, $P^9$, $P^{10}$, $P^{11}$, and $P^{12}$ each represent a polymer chain containing hydrogenated conjugated diene units, $R^6$, $R^7$, $R^8$, and $R^9$ each independently represent an alkyl group having 1 to 12 carbon atoms, $R^{10}$ and $R^{11}$ each independently represent a hydrogen atom or an alkyl group having 1 to 12 carbon atoms, at least one of $R^{10}$ or $R^{11}$ represents an alkyl group having 1 to 12 carbon atoms, or $R^{10}$ and $R^{11}$ are bonded to form an alkylene chain having 2 to 24 carbon atoms, $R^{12}$ represents an alkyl group having 1 to 12 carbon atoms, $R^{13}$ and $R^{14}$ each independently represent a hydrogen atom or an alkyl group having 1 to 12 carbon atoms, at least one of $R^{13}$ or $R^{14}$ represents an alkyl group having 1 to 12 carbon atoms, or $R^{13}$ and $R^{14}$ are bonded to form an alkylene chain having 2 to 24 carbon atoms, and M represents one alkali metal or 1/2 alkaline earth metal.)

[4] A resin composition including a vinyl alcohol-based polymer and the hydrogenated polymer composition according to [3].

[5] The resin composition according to [4], in which the vinyl alcohol-based polymer is an ethylene-vinyl alcohol copolymer.

Advantageous Effects of Invention

According to the present invention, there are provided a hydrogenated polymer composition which contains a hydrogenated conjugated diene modified polymer containing a boronate ester group and a hydrogenated modified conjugated diene polymer containing a borinic acid group, and which has high reactivity to polar functional groups and excellent dispersibility in thermoplastic polymers, typically a vinyl alcohol-based polymer, and a method for producing the hydrogenated polymer composition.

Description of Embodiments

Hereinafter, the present invention will be described in detail.

The hydrogenated polymer composition of the present invention includes 65 to 99% by mass of at least one boronic acid-based hydrogenated conjugated diene modified polymer (A) selected from the group consisting of a hydrogenated conjugated diene modified polymer containing a boronic acid group represented by Formula (II), a hydrogenated conjugated diene modified polymer containing a boronate ester group represented by Formula (III), and a hydrogenated conjugated diene modified polymer containing a boronic acid salt group represented by Formula (IV); and 1 to 35% by mass of at least one borinic acid-based hydrogenated conjugated diene modified polymer (B) selected from the group consisting of a hydrogenated conjugated diene modified polymer containing a borinic acid group represented by Formula (V) or (VI), a hydrogenated conjugated diene modified polymer containing a borinate ester group represented

by Formula (VII) or (VIII), and a hydrogenated conjugated diene modified polymer containing a boronic acid salt group represented by Formula (IX) or (X).

In the present invention, the hydrogenated conjugated diene modified polymer containing a boronic acid group is represented by Formula (II).

[Chemical Formula 3]

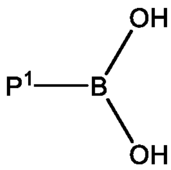

(II)

In Formula (II), $P^1$ represents a polymer chain containing hydrogenated conjugated diene units.

In the present invention, the hydrogenated conjugated diene modified polymer containing a boronate ester group is represented by Formula (III).

[Chemical Formula 4]

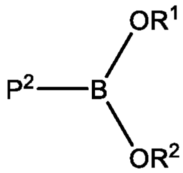

(III)

In Formula (III), $P^2$ represents a polymer chain containing hydrogenated conjugated diene units, $R^1$ and $R^2$ each independently represent a hydrogen atom or an alkyl group having 1 to 12 carbon atoms, and at least one of $R^1$ or $R^2$ represents an alkyl group having 1 to 12 carbon atoms, or $R^1$ and $R^2$ are bonded to form an alkylene chain having 2 to 24 carbon atoms. At least one of $R^1$ or $R^2$ described above has a Taft's steric parameter Es value of preferably -0.30 or less, more preferably -3.00 to -0.30, and still more preferably -1.55 to -0.39. In a preferred embodiment, all $R^1$ and $R^2$ satisfy the above Es value. At least one of $R^1$ or $R^2$ described above is preferably an n-propyl group, an isopropyl group, an n-butyl group, a sec-butyl group, an i-butyl group, or a cyclohexyl group, more preferably an isopropyl group or an n-butyl group, and still more preferably an isopropyl group. All $R^1$ and $R^2$ described above are each preferably an n-propyl group, an isopropyl group, an n-butyl group, a sec-butyl group, an i-butyl group, or a cyclohexyl group, more preferably an isopropyl group or an n-butyl group, and still more preferably an isopropyl group. The Taft's steric parameter Es value will be described below in the section of step (2) of the preferred method for producing a hydrogenated polymer composition.

In the present invention, the hydrogenated conjugated diene modified polymer containing a boronic acid salt group is represented by Formula (IV).

[Chemical Formula 5]

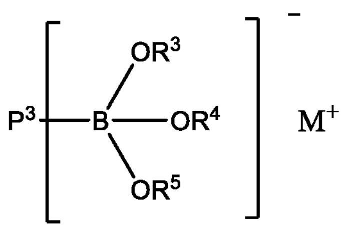

(IV)

In Formula (IV), $P^3$ represents a polymer chain containing hydrogenated conjugated diene units, $R^3$, $R^4$, and $R^5$ each independently represent a hydrogen atom, an alkyl group having 1 to 12 carbon atoms, or a polymer chain

containing hydrogenated conjugated diene units, and at least one of $R^3$, $R^4$, or $R^5$ is an alkyl group having 1 to 12 carbon atoms or a polymer chain containing hydrogenated conjugated diene units, or $R^3$ and $R^4$, $R^3$ and $R^5$, or $R^4$ and $R^5$ may be bonded to form an alkylene chain having 2 to 24 carbon atoms, or $R^3$, $R^4$, and $R^5$ may be bonded to form a trivalent saturated hydrocarbon chain having 3 to 36 carbon atoms.

At least one of $R^3$, $R^4$, or $R^5$ described above has a Taft's steric parameter Es value of preferably -0.30 or less, more preferably -3.00 to -0.30, and still more preferably - 1.55 to -0.39. In a preferred embodiment, all $R^3$, $R^4$, and $R^5$ satisfy the above Es value. At least one of $R^3$, $R^4$, or $R^5$ described above is preferably an n-propyl group, an isopropyl group, an n-butyl group, a sec-butyl group, an i-butyl group, or a cyclohexyl group, more preferably an isopropyl group or an n-butyl group, and still more preferably an isopropyl group. All $R^3$, $R^4$, and $R^5$ described above are each preferably an n-propyl group, an isopropyl group, an n-butyl group, a sec-butyl group, an i-butyl group, or a cyclohexyl group, more preferably an isopropyl group or an n-butyl group, and still more preferably an isopropyl group. M is one alkali metal or 1/2 alkaline earth metal, and is preferably lithium, sodium, or potassium, and more preferably lithium. Incidentally, one alkali metal means that in Formula (IV), since the cation of the alkali metal is monovalent with respect to one monovalent anion group represented by parentheses, the number of the alkali metal is one corresponding to the valence of the anion group. Similarly, 1/2 alkaline earth metal means that in Formula (IV), since the valence of the cation of the alkaline earth metal is divalent with respect to one monovalent anion group represented by parentheses, the number of the alkaline earth metal is 1/2 corresponding to the valence of the anion group.

In the present invention, the hydrogenated conjugated diene modified polymer containing a borinic acid group is represented by Formula (V) or (VI).

[Chemical Formula 6]

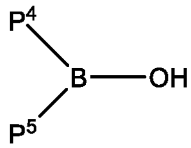

(V)

In Formula (V), $P^4$ and $P^5$ each represent a polymer chain containing hydrogenated conjugated diene units.

[Chemical Formula 7]

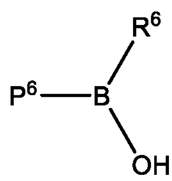

(VI)

In Formula (VI), $P^6$ represents a polymer chain containing hydrogenated conjugated diene units, and $R^6$ represents an alkyl group having 1 to 12 carbon atoms. $R^6$ described above is preferably a methyl group, an ethyl group, an n-propyl group, an isopropyl group, an n-butyl group, a sec-butyl group, an i-butyl group, or a cyclohexyl group, more preferably an isopropyl group or an n-butyl group, and still more preferably an isopropyl group.

In the present invention, the hydrogenated conjugated diene modified polymer containing a borinate ester group is represented by Formula (VII) or Formula (VIII).

[Chemical Formula 8]

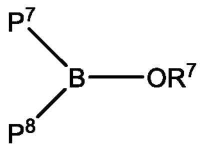

(VII)

In Formula (VII), $P^7$ and $P^8$ each represent a polymer chain containing hydrogenated conjugated diene units, and $R^7$ represents an alkyl group having 1 to 12 carbon atoms. $R^7$ described above has a Taft's steric parameter Es value of preferably -0.30 or less, more preferably -3.00 to -0.30, and still more preferably -1.55 to -0.39. $R^7$ described above is preferably an n-propyl group, an isopropyl group, an n-butyl group, a sec-butyl group, an i-butyl group, or a cyclohexyl group, more preferably an isopropyl group or an n-butyl group, and still more preferably an isopropyl group.

[Chemical Formula 9]

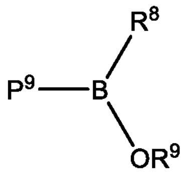

(VIII)

In Formula (VIII), $P^9$ represents a polymer chain containing hydrogenated conjugated diene units, $R^8$ represents an alkyl group having 1 to 12 carbon atoms, and $R^9$ represents an alkyl group having 1 to 12 carbon atoms. $R^9$ described above has a Taft's steric parameter Es value of preferably - 0.30 or less, more preferably -3.00 to -0.30, and still more preferably -1.55 to -0.39. $R^9$ described above is preferably an n-propyl group, an isopropyl group, an n-butyl group, a sec-butyl group, an i-butyl group, or a cyclohexyl group, more preferably an isopropyl group or an n-butyl group, and still more preferably an isopropyl group.

$R^8$ described above is preferably a methyl group, an ethyl group, an n-propyl group, an isopropyl group, an n-butyl group, a sec-butyl group, an i-butyl group, or a cyclohexyl group, more preferably an isopropyl group or an n-butyl group, and still more preferably an isopropyl group.

In the present invention, the hydrogenated conjugated diene modified polymer containing a borinic acid salt group is represented by Formula (IX) or Formula (X).

[Chemical Formula 10]

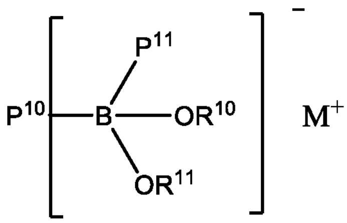

(IX)

In Formula (IX), $P^{10}$ and $P^{11}$ each represent a polymer chain containing hydrogenated conjugated diene units, $R^{10}$ and $R^{11}$ each independently represent a hydrogen atom or an alkyl group having 1 to 12 carbon atoms, at least one of $R^{10}$ or $R^{11}$ represents an alkyl group having 1 to 12 carbon atoms, or $R^{10}$ and $R^{11}$ are bonded to form an alkylene chain having 2 to 24 carbon atoms, and M represents one alkali metal or 1/2 alkaline earth metal.

At least one of $R^{10}$ or $R^{11}$ described above has a Taft's steric parameter Es value of preferably -0.30 or less, more preferably -3.00 to -0.30, and still more preferably -1.55 to -0.39. In a preferred embodiment, all $R^{10}$ and $R^{11}$ satisfy the above Es value. At least one of $R^{10}$ or $R^{11}$ described above is preferably an n-propyl group, an isopropyl group, an n-butyl group, a sec-butyl group, an i-butyl group, or a cyclohexyl group, more preferably an isopropyl group or an n-butyl group, and still more preferably an isopropyl group. All $R^{10}$ and $R^{11}$ described above are each preferably an n-propyl group, an isopropyl group, an n-butyl group, a sec-butyl group, an i-butyl group, or a cyclohexyl group, more preferably an isopropyl group or an n-butyl group, and still more preferably an isopropyl group. M is one alkali metal or 1/2 alkaline earth metal, and is preferably lithium, sodium, or potassium, and more preferably lithium.

[Chemical Formula 11]

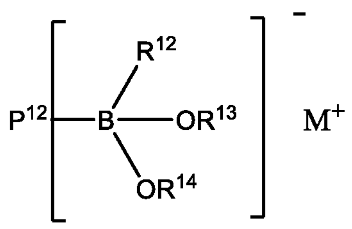

(X)

In Formula (X), $P^{12}$ represents a polymer chain containing hydrogenated conjugated diene units, $R^{12}$ represents an alkyl group having 1 to 12 carbon atoms, $R^{13}$ and $R^{14}$ each independently represent a hydrogen atom or an alkyl group having 1 to 12 carbon atoms, at least one of $R^{13}$ or $R^{14}$ represents an alkyl group having 1 to 12 carbon atoms, or $R^{13}$ and $R^{14}$ are bonded to form an alkylene chain having 2 to 24 carbon atoms, and M represents one alkali metal or 1/2 alkaline earth metal.

At least one of $R^{13}$ or $R^{14}$ described above has a Taft's steric parameter Es value of preferably -0.30 or less, more preferably -3.00 to -0.30, and still more preferably -1.55 to -0.39. In a preferred embodiment, all $R^{13}$ and $R^{14}$ satisfy the above Es value. At least one of $R^{13}$ or $R^{14}$ described above is preferably an n-propyl group, an isopropyl group, an n-butyl group, a sec-butyl group, an i-butyl group, or a cyclohexyl group, more preferably an isopropyl group or an n-butyl group, and still more preferably an isopropyl group. All $R^{13}$ and $R^{14}$ described above are each preferably an n-propyl group, an isopropyl group, an n-butyl group, a sec-butyl group, an i-butyl group, or a cyclohexyl group, more preferably an isopropyl group or an n-butyl group, and still more preferably an isopropyl group.

$R^{12}$ described above is preferably a methyl group, an ethyl group, an n-propyl group, an isopropyl group, an n-butyl group, a sec-butyl group, an i-butyl group, or a cyclohexyl group, more preferably an isopropyl group or an n-butyl group, and still more preferably an isopropyl group. M is preferably lithium, sodium, or potassium, and more preferably lithium.

As described above, the formulae (II) to (X) include polymer chains containing hydrogenated conjugated diene units, represented by $P^1$ to $P^{12}$.

The hydrogenated conjugated diene units contained in $P^1$ to $P^{12}$ are obtained by polymerizing a conjugated diene to obtain a polymer chain containing conjugated diene units, and then performing hydrogen addition (hydrogenation) of the carbon-carbon double bonds of the conjugated diene units contained in the polymer chain. Examples of the conjugated diene include butadiene, isoprene, 2,3-dimethylbutadiene, 2-phenylbutadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, farnesene, and chloroprene. Among these conjugated dienes, butadiene and isoprene are preferable, and butadiene is more preferable. The conjugated diene may be used singly, or two or more kinds thereof may be used in combination. Details of hydrogenation will be described below in the section of the production method.

$P^1$ to $P^{12}$ may contain an unhydrogenated conjugated diene unit or a structural unit derived from another monomer which is other than the hydrogenated conjugated diene unit. A preferred form of the structural unit derived from another monomer is a structural unit derived from an aromatic vinyl compound (hereinafter, also referred to as an "aromatic vinyl compound unit").

Examples of the aromatic vinyl compound to be the aromatic vinyl compound unit that can be contained in $P^1$ to $P^{12}$ include styrene, $\alpha$-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene, and divinylbenzene. Among these aromatic vinyl compounds, styrene, $\alpha$-methylstyrene, and 4-methylstyrene are preferable. The aromatic vinyl compound to be the aromatic vinyl compound unit may be used singly, or two or more kinds thereof may be used in combination.

In a preferred embodiment, unhydrogenated conjugated diene units derived from at least one conjugated diene selected from the group consisting of butadiene and isoprene or hydrogenated conjugated diene units obtained by hydrogenating the conjugated diene units account for 30% by mass or more of all monomer units constituting the polymer

chain to be each of $P^1$ to $P^{12}$. The total content of the conjugated diene units derived from at least one monomer selected from the group consisting of butadiene and isoprene and the hydrogenated conjugated diene units of the conjugated diene is preferably 30 to 100% by mass, more preferably 40 to 100% by mass, still more preferably 50 to 100% by mass, still more preferably 60 to 100% by mass, and particularly preferably 70 to 100% by mass with respect to the total monomer units of the polymer chain to be each of $P^1$ to $P^{12}$.

With respect to all the monomer units constituting the polymer chain to be each of $P^1$ to $P^{12}$, the content of monomer units other than unhydrogenated conjugated diene units derived from at least one conjugated diene selected from the group consisting of butadiene and isoprene or the hydrogenated conjugated diene units of the conjugated diene is preferably 70% by mass or less, and more preferably 60% by mass or less.

Examples of the polymer chain to be each of $P^1$ to $P^{12}$ include polymer chains obtained by hydrogenating at least some of carbon-carbon double bonds contained in conjugated diene units included in a homopolymer chain or copolymer chain (random copolymer chain, block copolymer chain) of at least one conjugated diene or a copolymer chain (random copolymer chain, block copolymer chain) of a conjugated diene and a monomer other than the conjugated diene.

In a preferred embodiment, the weight average molecular weight (Mw) of the polymer chain to be each of $P^1$ to $P^{12}$ is preferably 1,000 or more and 1,000,000 or less, more preferably 2,000 or more and 500,000 or less, and still more preferably 3,000 or more and 100,000 or less. The weight average molecular weight (Mw) of the hydrogenated polymer composition of the present invention is also preferably within the above range. When the Mw of the polymer chain is within the above range, there is a tendency that the process passability during production is excellent and the economic efficiency is favorable. In the present invention, unless otherwise specified, the Mw is a weight average molecular weight measured by the gel permeation chromatography (GPC) relative to standard polystyrenes.

The molecular weight distribution (Mw/Mn) of the polymer chain to be each of $P^1$ to $P^{12}$ is preferably 1.0 to 20.0, more preferably 1.0 to 10.0, still more preferably 1.0 to 5.0, even still more preferably 1.0 to 2.0, particularly preferably 1.0 to 1.5, and more particularly preferably 1.0 to 1.2. When Mw/Mn is within the above range, the variation in viscosity of the resulting hydrogenated conjugated diene modified polymer is reduced, which is preferable. In addition, the molecular weight distribution (Mw/Mn) of the hydrogenated polymer composition of the present invention is also preferably within the above range from the viewpoint of reducing the variation in viscosity. In the present invention, Mn means a number average molecular weight, and Mn is a number average molecular weight measured by GPC relative to standard polystyrenes. The molecular weight distribution (Mw/Mn) means a ratio (Mw/Mn) of a weight average molecular weight (Mw) to a number average molecular weight (Mn) measured by GPC relative to standard polystyrenes.

The vinyl content of the polymer chain to be each of $P^1$ to $P^{12}$ is not particularly limited, but is 0.01 to 90 mol% in a preferred embodiment, more preferably 0.1 to 80 mol%, and still more preferably 1 to 80 mol%. The vinyl content of the hydrogenated polymer composition of the present invention is also preferably within the above range. In the present invention, the "vinyl content" means the total mol% of conjugated diene units that are 1,2-bonded, 3,4-bonded (in the case of other than farnesene) and 3,13-bonded (in the case of farnesene) (conjugated diene units that are bonded by other than 1,4-bonding (in the case of other than farnesene) and 1,13-bonding (in the case of farnesene)) in all the conjugated diene units in the polymer chain or the polymer taken as 100 mol%. The vinyl content is calculated, using $^1$H-NMR, from an area ratio of peaks derived from conjugated diene units that are 1,2-bonded, 3,4-bonded (in the case of other than farnesene) and 3,13-bonded (in the case of farnesene) to peaks derived from conjugated diene units that are 1,4-bonded (in the case of other than farnesene) and 1,13-bonded (in the case of farnesene).

The vinyl content of the polymer of the polymer chain to be each of $P^1$ to $P^{12}$ can be designed according to the purpose, and for example, when the vinyl content is less than 70 mol%, the glass transition temperature (Tg) of the polymer decreases, and the fluidity and low-temperature properties of the resulting hydrogenated polymer composition tend to be excellent. In an embodiment in which the fluidity and/or low-temperature characteristics of the resulting hydrogenated polymer composition are important, the vinyl content of the polymer of the polymer chain to be each of $P^1$ to $P^{12}$ is preferably 1 to 60 mol%, more preferably 2 to 55 mol%, and still more preferably 3 to 50 mol%. As a preferred embodiment, the hydrogenated polymer composition of the present invention may be used by being mixed with a polymer ($\beta$) other than the hydrogenated polymer composition (details will be described later). In that case, the polymer ($\beta$) is more preferably a thermoplastic polymer ($\beta$1). When, for example, a vinyl alcohol-based polymer and polypropylene are contained as the ($\beta$1), the vinyl content of the polymer of the polymer chain to be each of $P^1$ to $P^{12}$ is preferably 45 to 90 mol%, more preferably 50 to 85 mol%, and still more preferably 55 to 80 mol% from the viewpoint of further improving the dispersibility of the hydrogenated polymer composition and the thermoplastic polymer ($\beta$1).

When the hydrogenated polymer composition of the present invention is produced by, for example, the method described later, the vinyl content can be adjusted to a desired value by controlling, for example, the kind of solvent used in the step (1), the polar compound to be used as necessary, or the polymerization temperature.

The glass transition temperature (Tg) of the polymer chain to be each of $P^1$ to $P^{12}$ may vary depending on, for example, the vinyl contents of the hydrogenated butadiene units, the hydrogenated isoprene units, and the hydrogenated conjugated diene units other than the hydrogenated butadiene units or the hydrogenated isoprene units, the kind of the

hydrogenated conjugated diene unit, and the content of the structural unit derived from a monomer other than the hydrogenated diene, but it is preferably -150 to 50°C, more preferably -130 to 50°C, and still more preferably -130 to 30°C. When Tg is within the above range, for example, an increase in viscosity can be suppressed, and handling becomes easy. The glass transition temperature (Tg) of the polymer composition of the present invention is also preferably within the above range from the viewpoint of ease of handling. In the present invention, Tg is a value of a peak top of DDSC (differential curve of DSC) determined by differential scanning calorimetry (DSC) measurement.

The hydrogenated polymer composition of the present invention is characterized by including 65 to 99% by mass of at least one boronic acid-based hydrogenated conjugated diene modified polymer (A) selected from the group consisting of a hydrogenated conjugated diene modified polymer containing a boronic acid group represented by Formula (II), a hydrogenated conjugated diene modified polymer containing a boronate ester group represented by Formula (III), and a hydrogenated conjugated diene modified polymer containing a boronic acid salt group represented by Formula (IV); and 1 to 35% by mass of at least one borinic acid-based hydrogenated conjugated diene modified polymer (B) selected from the group consisting of a hydrogenated conjugated diene modified polymer containing a borinic acid group represented by Formula (V) or (VI), a hydrogenated conjugated diene modified polymer containing a borinate ester group represented by Formula (VII) or (VIII), and a hydrogenated conjugated diene modified polymer containing a borinic acid salt group represented by Formula (IX) or (X), with respect to the mass of all the polymers contained in the composition.

The hydrogenated polymer composition of the present invention contains the boronic acid-based hydrogenated conjugated diene modified polymer (A) and the borinic acid-based hydrogenated conjugated diene modified polymer (B) at the above percentage, thereby making it possible to enhance the reactivity to polar functional groups and the dispersibility in thermoplastic polymers, typically a vinyl alcohol-based polymer.

The hydrogenated polymer composition of the present invention typically means a mixture of a polymer modified with a boron-containing functional group and an unmodified polymer that is not modified by the functional group modification. Thus, in a preferred embodiment, the hydrogenated polymer composition of the present invention includes only a mixture of a polymer modified with a boron-containing functional group and an unmodified polymer that is not modified by functional group modification.

The contents of the boronic acid-based hydrogenated conjugated diene modified polymer (A) and the borinic acid-based hydrogenated conjugated diene modified polymer (B) in the hydrogenated polymer composition are determined from the boron concentration in the hydrogenated polymer composition and the $^{11}B$-NMR spectrum. The boron concentration can be determined by ICP optical emission spectroscopy analysis, and the contents of (A) and (B) are calculated from the area ratio of signals in a $^{11}B$-NMR spectrum. When a hydrogenated polymer composition is obtained using a borate ester compound, the contents of (A) and (B) are also calculated from the area ratio of the GPC chart because the molecular weight of (B) is larger than that of (A). When the peak resolution is low, the peaks are separated as Gaussian distribution peaks, and the area ratio is calculated.

From the viewpoint of further enhancing excellent dispersibility in thermoplastic polymers, typically a vinyl alcohol-based polymer, the content percentages of the boronic acid-based hydrogenated conjugated diene modified polymer (A) and the borinic acid-based hydrogenated conjugated diene modified polymer (B) in the hydrogenated polymer composition of the present invention are preferably 65 to 99% by mass of the boronic acid-based hydrogenated conjugated diene modified polymer (A) and 1 to 35% by mass of the borinic acid-based hydrogenated conjugated diene modified polymer (B), and more preferably 80 to 99% by mass of the boronic acid-based hydrogenated conjugated diene modified polymer (A) and 1 to 20% by mass of the borinic acid hydrogenated modified polymer (B) .

The content percentage of the boronic acid-based hydrogenated conjugated diene modified polymer (A) and the borinic acid-based hydrogenated conjugated diene modified polymer (B) in the hydrogenated polymer composition of the present invention can be controlled by, for example, the Taft's steric parameter Es value, the reaction temperature, or the amount of polar compounds, for example, in the method for producing a hydrogenated conjugated diene modified polymer described later.

The Mw of the boronic acid-based hydrogenated conjugated diene modified polymer (A) is preferably 2,000 or more and 200,000 or less, and more preferably 4,000 or more and 100,000 or less.

The Mw of the borinic acid-based hydrogenated conjugated diene modified polymer (B) is preferably 4,000 or more and 400,000 or less, and more preferably 8,000 or more and 200,000 or less.

The hydrogenated polymer composition of the present invention may further contain at least one of a boron-linked trimer (C) represented by Formula (XI) or an unmodified polymer (D) having no boron-containing functional group as long as the reactivity of the hydrogenated polymer composition is not impaired. The contents of (C) and (D) in the hydrogenated polymer composition are each preferably 20% by mass or less.

[Chemical Formula 12]

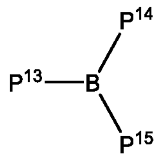

(XI)

In Formula (XI), $P^{13}$, $P^{14}$, and $P^{15}$ each represent a polymer chain containing hydrogenated conjugated diene units similarly to $P^1$ to $P^{12}$.

The content of the hydrogenated conjugated diene modified polymer having a boron-containing functional group (typically, a hydrogenated conjugated diene modified polymer having a boron-containing functional group at the terminal) in the hydrogenated polymer composition is preferably 60% by mass or more, and more preferably 65% by mass or more, with respect to the mass of all the polymers contained in the composition.

The boron content in the hydrogenated polymer composition can be determined by quantifying the boron content per weight of the hydrogenated polymer composition by high frequency inductively coupled plasma (ICP) optical emission spectroscopy analysis.

From the viewpoint of reactivity to polar functional groups and excellent dispersibility in thermoplastic polymers, typically a vinyl alcohol-based polymer, the content of boron in the polymer composition is preferably 0.001 to 5% by mass, and more preferably 0.003 to 2% by mass.

In the boronic acid-based hydrogenated conjugated diene modified polymer (A) and the borinic acid-based hydrogenated conjugated diene modified polymer (B) which are contained in the hydrogenated polymer composition of the present invention, and the boron-linked trimer (C) represented by Formula (XI) and the unmodified polymer (D) having no boron atom at the terminal which may be contained in the composition in some cases, at least some of carbon-carbon double bonds contained in the conjugated diene units included in these polymers are hydrogenated.

In these polymers of the hydrogenated polymer composition of the present invention, from the viewpoints of heat resistance and weather resistance, the hydrogen addition rate (hydrogenation rate) of the carbon-carbon double bonds contained in the conjugated diene units in the polymers before hydrogen addition (unhydrogenated polymers) is preferably 50 mol% or more, more preferably 80 mol% or more, and still more preferably 90 mol% or more. The hydrogenation rate is usually 100 mol% or less. Furthermore, the hydrogenation rate may be substantially 100 mol% (that is, substantially completely hydrogenated). Incidentally, the hydrogenation rate is a value determined from the contents of the carbon-carbon double bonds contained in the conjugated diene units in the polymer before and after hydrogenation which are separately calculating using $^1H$-NMR.

As a method for producing the hydrogenated polymer composition containing a hydrogenated conjugated diene modified polymer having a boron-containing functional group of the present invention, a production method including the following steps (1), (2), and (3) is preferable.

Step (1); a step of anionically polymerizing a monomer including a conjugated diene in the presence of a reactive metal or reactive metal compound capable of causing anionic polymerization to produce a reactive terminal polymer (hereinafter, also referred to as a reactive terminal polymer (Z)).

The description of specific examples and preferred embodiments of a monomer which is a structural unit derived from a monomer constituting the reactive terminal polymer (Z) and the description of specific examples and preferred embodiments of a structural unit derived from a monomer contained in the reactive terminal polymer (Z) are the same as the description of the polymer chains which are represented by $P^1$ to $P^{12}$, contain conjugated diene units for constituting hydrogenated conjugated diene units, and contain an unhydrogenated conjugated diene unit and a structural unit derived from another monomer such as an aromatic vinyl compound unit other than a conjugated diene as necessary, in the above-described hydrogenated polymer composition.

The reactive terminal polymer (Z) having an anionic polymerization reactive terminal can be produced using a known polymerization method. For example, the reactive terminal polymer (Z) can be obtained by anionically polymerizing a monomer in a solvent which is inert to the polymerization terminal in the presence of a polar compound as necessary using, as an initiator, a reactive metal or a reactive metal compound capable of causing anionic polymerization.

As the reactive metal or reactive metal compound capable of causing anionic polymerization, an organoalkali metal compound is preferable, and an organolithium compound is more preferable.

Examples of the reactive metal capable of causing anionic polymerization include alkali metals such as lithium, sodium, and potassium; alkaline earth metals such as beryllium, magnesium, calcium, strontium, and barium; and lanthanoid rare earth metals such as lanthanum and neodymium. Among them, alkali metals and alkaline earth metals are preferable, and alkali metals are more preferable.

Examples of the organoalkali metal compound suitably used as the reactive metal compound capable of causing anionic polymerization include organomonolithium compounds such as methyllithium, ethyllithium, n-butyllithium, sec-butyllithium, tert-butyllithium, pentyllithium, hexyllithium, phenyllithium, and stilbene lithium; polyfunctional organolithium compounds such as dilithiomethane, dilithionaphthalene, 1,4-dithiobutane, 1,4-dilithio-2-ethylcyclohexane, and 1,3,5-trithiobenzene; sodium naphthalene, and potassium naphthalene. Among these organoalkali metal compounds, organolithium compounds are preferable. Examples of the organolithium compound include methyllithium, ethyllithium, n-butyllithium, sec-butyllithium, tert-butyllithium, and pentyllithium.

Examples of the solvent include aliphatic hydrocarbons such as n-butane, n-pentane, isopentane, n-hexane, n-heptane, and isooctane; cycloaliphatic hydrocarbons such as cyclopentane, cyclohexane, and methylcyclopentane; and aromatic hydrocarbons such as benzene, toluene, and xylene.

In the anionic polymerization, a polar compound may be added. The polar compound is usually used for adjusting the microstructure (vinyl content) of the conjugated diene unit without deactivating the reaction in the anionic polymerization. Examples of the polar compound include ether compounds such as dibutyl ether, tetrahydrofuran, and ethylene glycol diethyl ether; tertiary amines such as tetramethylethylenediamine and trimethylamine; alkali metal alkoxides, and phosphine compounds. The polar compound is usually used in an amount of 0.01 to 1,000 mol with respect to 1 mol of the organoalkali metal compound.

The temperature of the anionic polymerization is usually in the range of -80 to 150°C, preferably in the range of 0 to 100°C, and more preferably in the range of 10 to 90°C. The polymerization mode may be either a batch type or a continuous type.

Step (2); a step of obtaining an unhydrogenated conjugated diene modified polymer having a boron-containing functional group by reacting the reactive terminal polymer (Z) with a boric acid compound that has at least two partial structures (hereinafter, the structure is also referred to as a partial structure (I)) represented by Formula (I) and in which at least one R bonded to an oxygen atom contained in the partial structure (I) has a Taft's steric parameter Es value of -0.30 or less.

B-O-R (I)

(In Formula (I), B represents a boron atom, O represents an oxygen atom, and R represents an organic group.)

Here, the Taft's steric parameter Es value is a relative rate based on the substituent effect of a methyl group in the esterification reaction rate of the substituted carboxylic acid under acidic conditions, and is a general index representing the steric bulkiness of the substituent. The present invention includes the Es (Taft) values listed in Table 1 described in Tetrahedron, 1978, Vol. 34, pp. 3553 to 3562, and the values measured by a method in accordance with the method described in the above literature. Regarding this value, for example, the value of a hydrogen atom is 1.24, the value of a methyl group is 0.0, the value of an ethyl group is -0.08, the value of an n-propyl group is -0.36, the value of an isopropyl group is -0.47, the value of an n-butyl group is -0.39, the value of a sec-butyl group is -1.13, the value of an i-butyl group is -0.93, the value of a t-butyl group is -1.54, and the value of a cyclohexyl group is -0.79.

The Taft's steric parameter Es value is preferably - 3.00 to -0.30, and more preferably -1.55 to -0.39.

In such a bulky boric acid compound that at least one R included in the partial structure (I) has a Taft's steric parameter Es value of -0.30 or less, it becomes difficult to form a cluster structure composed of the boric acid compound due to steric hindrance, thus exhibits high electrophilicity, and improves reaction rate with the reactive terminal. As a result, a high content percentage of the boronic acid-based hydrogenated conjugated diene modified polymer (A) can be obtained. In a preferred embodiment, all R bonded to an oxygen atom contained in the partial structure (I) satisfy the above Es value from the viewpoint of further improving the reaction rate.

As R satisfying the above Es value, an n-propyl group, an isopropyl group, an n-butyl group, a sec-butyl group, an i-butyl group, and a cyclohexyl group are preferable, an isopropyl group and an n-butyl group are more preferable, and an isopropyl group is still more preferable.

The boric acid compound is a boric acid compound having reactivity with the reactive terminal of the reactive terminal polymer (Z) obtained by anionic polymerization. Specifically, a borate ester represented by Formula (XII) is preferable.

[Chemical Formula 13]

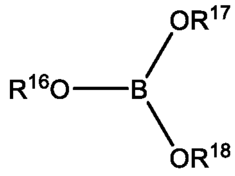

(XII)

In Formula (XII), $R^{16}$, $R^{17}$, and $R^{18}$ each represent a hydrocarbon group having 1 to 12 carbon atoms.

At least one of $R^{16}$, $R^{17}$, or $R^{18}$ described above has a Taft's steric parameter Es value of preferably -0.30 or less, more preferably -3.00 to -0.30, and still more preferably - 1.55 to -0.39. In a preferred embodiment, all $R^{16}$, $R^{17}$, and $R^{18}$ described above satisfy the above Es value. At least one of $R^{16}$, $R^{17}$, or $R^{18}$ described above is preferably an n-propyl group, an isopropyl group, an n-butyl group, a sec-butyl group, an i-butyl group, or a cyclohexyl group, more preferably an isopropyl group or an n-butyl group, and still more preferably an isopropyl group. All $R^{16}$, $R^{17}$, and $R^{18}$ described above are each preferably an n-propyl group, an isopropyl group, an n-butyl group, a sec-butyl group, an i-butyl group, or a cyclohexyl group, more preferably an isopropyl group or an n-butyl group, and still more preferably an isopropyl group.

Examples of the borate ester represented by Formula (XII) include tri-n-propyl borate, tri-n-butyl borate, triisopropyl borate, tri-sec-butyl borate, tri-i-butyl borate, and tricyclohexyl borate. Among them, tri-n-propyl borate, tri-n-butyl borate, and triisopropyl borate are preferable.

In the step (2), the boric acid compound is used in an amount of preferably 0.5 to 10 mol, more preferably 1 to 5 mol with respect to 1 mol of the reactive terminal polymer (Z) .

In the step (2), it is preferable that a polar compound is mixed with the boric acid compound, and then this mixture is reacted with the reactive terminal polymer (Z).

Examples of the polar compound include ether compounds such as dibutyl ether, tetrahydrofuran, and ethylene glycol diethyl ether; tertiary amines such as tetramethylethylenediamine and trimethylamine; alkali metal alkoxides, and phosphine compounds. The polar compound is usually used in an amount of 0.01 to 1,000 mol with respect to the boric acid compound used in step (2). By adding the polar compound, the molecular association of the boric acid compound can be dissociated, and the reactivity can be enhanced.

The temperature of reaction of the reactive terminal polymer (Z) and the boric acid compound in the step (2) is usually in the range of -80 to 150°C, preferably in the range of 0 to 100°C, and more preferably in the range of 10 to 90°C.

After an unhydrogenated conjugated diene modified polymer having a boron-containing functional group is obtained by reacting the reactive terminal polymer (Z) with the boric acid compound in the step (2), a polymerization terminator for the reactive terminal polymer (Z) may be further added. By adding the polymerization terminator in this way, it is possible to reliably suppress the side reaction due to the reactive terminal contained in the reactive terminal polymer (Z) remaining after the reaction with the boric acid compound. Examples of the polymerization terminator include alcohols such as methanol, ethanol, n-propanol, and isopropanol.

The reaction mode of the step (2) may be either a batch type or a continuous type.

Step (3); a step of hydrogen addition (hydrogenation) of at least some of carbon-carbon double bonds contained in the conjugated diene units included in the unhydrogenated conjugated diene modified polymer obtained in the step (2).

By this step (3), hydrogen is added to at least some of carbon-carbon double bonds contained in the conjugated diene units.

In order to obtain the hydrogenated polymer composition of the present invention, the method for hydrogenating the unhydrogenated conjugated diene modified polymer is not particularly limited, and for example, a known method can be used. The step (1), the step (2) and the hydrogenation may be consecutively performed, or the composition containing the unhydrogenated conjugated diene modified polymer having a boron-containing functional group obtained in the step (2) may be once isolated and then hydrogenated. The method for isolating the composition containing the unhydrogenated conjugated diene modified polymer is the same as the method for collecting the hydrogenated polymer composition from the reaction product obtained in step (3) described later.

As the catalyst used in the hydrogenation reaction in the step (2), a catalyst capable of hydrogenating a carbon-carbon double bond contained in, for example, an olefin compound can be used. Examples of such a catalyst usually include heterogeneous catalysts and homogeneous catalysts.

The heterogeneous catalyst is not particularly limited, and specific examples thereof include sponge metal catalysts such as sponge nickel, sponge cobalt, and sponge copper; and supported metal catalysts such as nickel silica, nickel alumina, nickel zeolite, nickel diatomaceous earth, palladium silica, palladium alumina, palladium zeolite, palladium diatomaceous earth, palladium carbon, palladium calcium carbonate, platinum silica, platinum alumina, platinum zeolite, platinum diatomaceous earth, platinum carbon, platinum calcium carbonate, ruthenium silica, ruthenium alumina, ruthenium zeolite, ruthenium diatomaceous earth, ruthenium carbon, ruthenium calcium carbonate, iridium silica, iridium

alumina, iridium zeolite, iridium diatomaceous earth, iridium carbon, iridium calcium carbonate, cobalt silica, cobalt alumina, cobalt zeolite, cobalt diatomaceous earth, cobalt carbon, and cobalt calcium carbonate.

These heterogeneous catalysts may be modified with, for example, iron, molybdenum, and magnesium for the purpose of improving reactivity, improving selectivity, and stability. These heterogeneous catalysts may be used singly or in combination of two or more kinds thereof.

The homogeneous catalyst is not particularly limited, and specific examples thereof include a Ziegler-type catalyst such as a catalyst composed of a transition metal compound and alkylaluminum or alkyllithium; and a metallocene-type catalyst such as a catalyst composed of a bis(cyclopentadienyl) compound of a transition metal such as titanium, zirconium, or hafnium and an organometallic compound of a metal such as lithium, sodium, potassium, aluminum, zinc, or magnesium.

Specific examples of the transition metal compound used in the Ziegler-type catalyst include nickel salts such as nickel acetate, nickel octylate, nickel neodecanoate, nickel naphthenate, and nickel acetylacetonate; cobalt salts such as cobalt acetate, cobalt octylate, cobalt neodecanoate, cobalt naphthenate, and cobalt acetylacetonate; titanocene dichloride, and zirconocene dichloride.

Specific examples of the alkylaluminum used in the Ziegler-type catalyst include trimethylaluminum, triethylaluminum, triisobutylaluminum, and trioctylaluminum.

Specific examples of the alkyllithium used in the Ziegler-type catalyst include methyllithium, ethyllithium, n-butyllithium, sec-butyllithium, and t-butyllithium.

These homogeneous catalysts may be used singly or in combination of two or more kinds thereof. The homogeneous catalyst may be used by being mixed with the heterogeneous catalyst.

Among these catalysts, from the viewpoint of reactivity, a homogeneous catalyst is preferable, a Ziegler-type catalyst is more preferable, a Ziegler-type catalyst composed of a transition metal compound and alkylaluminum is still more preferable, and a Ziegler-type catalyst composed of titanocene dichloride and alkylaluminum is particularly preferable.

In the hydrogenation reaction of the step (2), since polymers are hydrogenated, the reaction activity is generally lower than that of low molecular weight compounds. Thus, relatively high temperature and high pressure conditions are often preferable as the reaction conditions. In this case, in an embodiment in which thermal stability of catalytic activity is important as a catalyst used in the hydrogenation reaction, it is preferable to perform the hydrogenation reaction with a heterogeneous catalyst having high thermal stability. From the viewpoint of hydrogenation activity, it is preferable to use nickel or palladium as a metal having hydrogenation activity. In addition, in order to suppress undesirable side reactions during the hydrogenation reaction, it is preferable to use calcium carbonate or a carbon carrier as a carrier, and it is more preferable to use a carbon carrier.

The hydrogenation reaction is usually carried out in a solvent. Such a solvent is not particularly limited, and for example, solvents used in the anionic polymerization exemplified in the above step (1) can be used.

The hydrogenation reaction may be performed, for example, in a state in which the unhydrogenated conjugated diene modified polymer having a boron-containing functional group is present in the solvent used in the step (1) without particularly treating the solvent; after a part of the solvent is removed by a method such as distillation, it may be performed in the remaining solvent; alternatively, after the solvent is diluted with a solvent, it may be performed in the diluted solvent. After completion of the step (1), the composition containing the unhydrogenated conjugated diene modified polymer having a boron-containing functional group may be once taken out, the composition containing the unhydrogenated conjugated diene modified polymer may be added into a solvent, and hydrogenation reaction may be performed in the solvent.

When the hydrogenation reaction is performed in a solvent, the amount of the solvent used is preferably an amount to give 1% by mass or more and 30% by mass or less as a concentration of the entire polymer including the unhydrogenated conjugated diene modified polymer that has undergone step (1) in the reaction liquid. When the hydrogenation reaction is performed at less than 1% by mass, productivity may be significantly reduced, and when the hydrogenation reaction is performed at more than 30% by mass, viscosity may be significantly increased, and mixing efficiency may be reduced.

The reaction pressure of the hydrogenation reaction may be appropriately set depending on, for example, the catalyst to be used, and is usually 0.1 MPa to 20 MPa, preferably 0.5 MPa to 15 MPa, and more preferably 0.5 MPa to 5 MPa as a total pressure.

The hydrogenation reaction is performed in the presence of hydrogen gas, but may be performed in the presence of a gas mixed with a gas inert to the hydrogenation reaction other than hydrogen gas. Specific examples of the gas inert to the hydrogenation reaction include nitrogen, helium, argon, and carbon dioxide. In certain reaction conditions, the solvent used in the reaction may have a partial pressure at a significant ratio as a gas component, but such a situation usually has no problem as long as the hydrogenation reaction proceeds.

The reaction temperature of the hydrogenation reaction may be appropriately set depending on the catalyst to be used, and is usually 20°C to 250°C, preferably 50°C to 180°C, and more preferably 60°C to 180°C. In general, it may

be desirable that the reaction of a heterogeneous catalyst is performed at a higher temperature than that of a homogeneous catalyst.

The reaction time of the hydrogenation reaction may be appropriately set depending on the kind of catalyst to be used, the amount of catalyst, and the reaction temperature, but is usually 0.1 to 100 hours, and preferably 1 to 50 hours. When the reaction time is too short, a desired hydrogenation rate may not be obtained. When the reaction time is too long, undesired side reaction progress becomes remarkable, and a composition containing a hydrogenated conjugated diene modified polymer having desired physical properties may not be obtained.

The reaction mode of the hydrogenation reaction is not particularly limited, and may be appropriately set depending on, for example, the kind of catalyst used for the reaction. Examples of the reaction mode include a batch reaction mode, a semi-continuous reaction mode (semi-batch reaction mode), and a continuous reaction mode. Suitable continuous reaction modes include, for example, plug flow mode (e.g., PFR) and continuous flow stirred mode (e.g., CSTR).

When a heterogeneous catalyst is used, hydrogenation reaction can be performed using a fixed bed reaction vessel.

When the hydrogenation reaction is performed under active mixing conditions, examples of the mixing method include a mixing method by stirring and a mixing method in which the reaction liquid is circulated in a loop form.

When a heterogeneous catalyst is used under mixing conditions, the reaction is performed with a suspension bed, and the reaction field is a gas-liquid-solid reaction field. When a homogeneous catalyst is used under mixing conditions, the reaction field is a gas-liquid two-phase reaction field.

The hydrogenation reaction in a reaction vessel may be performed in a reaction mode in which the hydrogenation reaction in the reaction vessel is once terminated, the reaction liquid is taken out, and at least a part of the taken out reaction liquid is charged into the same or different reaction vessel to further perform the hydrogenation reaction. When localization of heat generation accompanying the hydrogenation reaction can be avoided by performing the hydrogenation reaction in such a reaction mode, the hydrogenation rate may be improved.

The hydrogenation reaction may be performed in a single reaction mode, or may be performed in combination of two or more reaction modes that are the same or different.

In the case of aiming at a higher hydrogenation rate, it may be desirable that the hydrogenation reaction step includes a step of reacting in a plug flow mode using a fixed bed reaction vessel.

The amount of the catalyst used in the hydrogenation reaction may be appropriately set depending on, for example, the kind of the catalyst to be used, the concentration of the entire polymer containing the unhydrogenated conjugated diene modified polymer that has undergone step (1), and the reaction mode. However, in a case where the hydrogenation reaction is performed with a suspension bed using a heterogeneous catalyst, the amount of the catalyst used per 100 parts by mass of the reaction liquid containing the unhydrogenated conjugated diene modified polymer that has undergone step (1) is usually 0.01 to 20 parts by mass, preferably 0.05 to 15 parts by mass, and more preferably 0.1 to 10 parts by mass. When the amount of the catalyst used is too small, the hydrogenation reaction may require a longer time, and when the amount of the catalyst used is too large, mixing the heterogeneous catalyst may require more power. When the hydrogenation reaction is performed with a fixed bed, it is difficult to define the amount of catalyst used per reaction liquid containing the unhydrogenated conjugated diene modified polymer that has undergone step (1), and the amount of catalyst used may be appropriately set depending on, for example, the kind of reaction vessel to be used.

When a Ziegler-type catalyst; a metallocene-based catalyst as the homogeneous catalyst is used, the concentration of the transition metal compound in the reaction liquid containing the unhydrogenated conjugated diene modified polymer has undergone step (1) is usually 0.001 mmol/liter to 100 mmol/liter, and preferably 0.01 mmol/liter to 10 mmol/liter.

The catalyst used in the hydrogenation reaction may be separated from the liquid containing the hydrogenated conjugated diene modified polymer having a boron-containing functional group as necessary after the completion of the hydrogenation reaction. The separation method is not particularly limited as long as the catalyst can be separated. When a heterogeneous catalyst is used, the catalyst can be separated by, for example, continuous or batch filtration, centrifugation, settling by standing, and decantation. When a homogeneous catalyst is used, the catalyst can be separated by, for example, flocculation and sedimentation, adsorption, washing, and aqueous phase extraction.

Even if the catalyst after use is separated by these separation methods, a trace amount of metal component originating from the catalyst may remain in a liquid containing the hydrogenated conjugated diene modified polymer having a boron-containing functional group. Also in this case, since the metal component remains in the liquid, the remaining metal component can be separated by separation methods such as flocculation and sedimentation, adsorption, washing, and aqueous phase extraction as described above.

The catalyst recovered by the separation can be used again for hydrogenation reaction after, for example, a part thereof is removed or a new catalyst is added, as necessary.

The hydrogenated polymer composition obtained by the production method of the present invention is collected from the reaction product obtained in the step (3). The method for collecting the hydrogenated polymer composition is

not particularly limited, but when the reaction product is obtained in step (3) as a solution containing the hydrogenated polymer composition, the polymer composition can be collected by, for example, pouring the resulting solution into a poor solvent such as methanol to precipitate the hydrogenated polymer composition; pouring the resulting solution with steam into hot water to azeotropically remove the solvent (steam stripping); or washing the polymer solution with water, separating, and then drying. At this time, washing efficiency can be further enhanced by using an acidic aqueous solution for washing. As the acid to be used, for example, monovalent or polyvalent strong acids such as hydrochloric acid, nitric acid, and sulfuric acid; monovalent or polyvalent carboxylic acids such as acetic acid, propionic acid, succinic acid, and citric acid; monovalent or polyvalent weak acids such as carbonic acid and phosphoric acid are preferable.

The resin composition of the present invention includes a hydrogenated polymer composition (hereinafter, also referred to as a hydrogenated polymer composition ($\alpha$)) containing a boronic acid-based hydrogenated conjugated diene modified polymer (A) and a borinic acid-based hydrogenated conjugated diene modified polymer (B), and optionally contains a boron-linked trimer (C) and an unmodified polymer (D) having no boron atom at the terminal. The resin composition of the present invention may contain another polymer ($\beta$) other than the polymers contained in the hydrogenated polymer composition ($\alpha$). The other polymer ($\beta$) may be a thermoplastic polymer ($\beta$1) or a curable polymer ($\beta$2).

Examples of the thermoplastic polymer ($\beta$1) include acrylic resins such as poly methyl methacrylate and (meth)acrylate polymers or copolymers; olefin-based resins such as polyethylene, ethylene-vinyl acetate copolymers, polypropylene, polybuten-1, poly-4-methylpentene-1, and polynorbornene; ethylene-based ionomers; styrene-based resins such as polystyrene, styrene-maleic anhydride copolymers, high-impact polystyrene, AS resins, ABS resins, AES resins, AAS resins, ACS resins, and MBS resins; styrene-methyl methacrylate copolymers; styrene-methyl methacrylate-maleic anhydride copolymers; polyester resins such as polyethylene terephthalate, polybutylene terephthalate, and polylactic acid; polyamides such as nylon 6, nylon 66, and polyamide elastomers; polycarbonate; polyvinyl chloride; polyvinylidene chloride; polyvinyl acetate; vinyl alcohol-based polymers such as partially saponified polyvinyl alcohol, polyvinyl alcohol, and ethylene-vinyl alcohol copolymers; polyacetal; polyvinylidene fluoride; polyurethane; modified polyphenylene ether; polyphenylene sulfide; silicone rubber-modified resins; acrylic rubbers; silicone rubbers; styrene-based thermoplastic elastomers such as SEPS, SEBS, and SIS; and olefin-based rubbers such as IR, EPR, and EPDM. Among them, vinyl alcohol-based polymers are preferable, partially saponified polyvinyl alcohol, polyvinyl alcohol, and ethylene-vinyl alcohol copolymers are more preferable, and ethylene-vinyl alcohol copolymers are still more preferable, from the viewpoint of, for example, superior dispersibility in the hydrogenated polymer composition ($\alpha$) obtained in the present invention. The thermoplastic polymer ($\beta$1) may be used singly or in combination of two or more thereof.

The ethylene-vinyl alcohol copolymer is a saponified product of an ethylene-vinyl ester copolymer containing a structural unit derived from ethylene (ethylene unit) and a structural unit derived from a vinyl ester (vinyl ester unit). The content of the ethylene unit in the ethylene-vinyl alcohol copolymer is not particularly limited, but is usually in the range of 10 to 99 mol%, preferably 15 to 60 mol%, more preferably 20 to 60 mol%, and still more preferably 25 to 55 mol%.

The degree of saponification of the vinyl ester unit of the ethylene-vinyl alcohol copolymer is not particularly limited, but is usually in the range of 10 to 100 mol%, preferably 50 to 100 mol%, more preferably 80 to 100 mol%, still more preferably 95 to 100 mol%, and particularly preferably 99 to 100 mol%. If the degree of saponification is too low, the degree of crystallinity may be lowered, or thermal stability during melt molding may deteriorate. Thus, the degree of saponification is preferably high. Here, vinyl acetate is a representative example of the vinyl ester, and examples also include vinyl esters such as vinyl propionate, vinyl pivalate, vinyl valerate, vinyl caprate, and vinyl benzoate. These vinyl esters may be used singly or in combination of two or more kinds thereof.

As the ethylene-vinyl alcohol copolymer, a mixture of two or more different ethylene-vinyl alcohol copolymers may be used.

The ethylene-vinyl alcohol copolymer may contain a structural unit derived from another monomer other than the ethylene unit, the vinyl ester unit, or the saponified vinyl ester unit described above as long as the object of the present invention is not impaired. Examples of such other monomers include olefin-based monomers such as propylene, 1-butene, and isobutene; acrylamide-based monomers such as acrylamide, N-methylacrylamide, N-ethylacrylamide, and N,N-dimethylacrylamide; methacrylamide monomers such as methacrylamide, N-methylmethacrylamide, N-ethylmethacrylamide, and N,N-dimethylmethacrylamide; vinyl ether-based monomers such as methyl vinyl ether, ethyl vinyl ether, n-propyl vinyl ether, i-propyl vinyl ether, t-butyl vinyl ether, and dodecyl vinyl ether; allyl alcohol; vinyltrimethoxysilane; and N-vinyl-2-pyrrolidone.

The melt flow rate (hereinafter, sometimes simply abbreviated as "MFR") (temperature: 210°C, load: 2160 g) of the ethylene-vinyl alcohol copolymer in accordance with JIS K 7210: 2014 is preferably 0.1 g/10 min or more, more preferably 0.5 g/10 min or more, still more preferably 1 g/10 min or more. The MFR of the ethylene-vinyl alcohol copolymer is preferably 50 g/10 min or less, more preferably 30 g/10 min or less, still more preferably 15 g/10 min or less. By adjusting the MFR of the ethylene-vinyl alcohol copolymer to a value within this range, melt moldability is improved.

Examples of the curable polymer ($\beta$2) include epoxy resins, unsaturated polyester resins, epoxy (meth)acrylate resins, ester (meth)acrylate resins, phenol resins, urea resins, melamine resins, thermosetting urethane resins, silicon resins, imide resins, furan resins, alkyd resins, allyl resins, and diallyl phthalate resins. Among them, epoxy resins,

unsaturated polyester resins, and epoxy (meth)acrylate resins are preferable, of these, epoxy resins and unsaturated polyester resins are more preferable, and epoxy resins are still more preferable, from the viewpoints of availability and basic physical properties of the cured product, and from the viewpoint, for example, that a resin composition superior in air bubble releasability and toughness of the resulting cured product is obtained. The curable polymer (β2) may be used singly or in combination of two or more kinds thereof.

When the polymer (β) is contained in the resin composition of the present invention, the mass ratio (α)/(β) of the hydrogenated polymer composition (α) to the other polymer (β) is preferably 50/50 to 1/99, more preferably 40/60 to 2/98, still more preferably 30/70 to 3/97, even still more preferably 20/80 to 3/97, and particularly preferably 15/85 to 3/97.

In addition, various additives may be added to the resin composition of the present invention to such an extent that the effect of the present invention is not impaired. For example, when the other polymer (β) is the thermoplastic polymer (β1), regarding such an additive, for example, a reinforcing agent or a filler such as calcium carbonate, silica, carbon black, glass fiber, or clay, or a plasticizer such as process oil, polyethylene glycol, glycerin, or phthalate ester can be used as the additive. Examples of other additives include heat stabilizers, antioxidants, ultraviolet absorbers, colorants, pigments, lubricants, and surfactants. Furthermore, examples of the additive include blowing agents, and it is possible to prepare a foam from a polymer composition containing a blowing agent and the thermoplastic polymer (β1).

For example, when the other polymer (β) is the curable polymer (β2), examples of such an additive include curing agents, curing accelerators, known rubbers, thermoplastic elastomers, impact modifiers such as core-shell particles, fillers (inorganic particles such as silica, talc, calcium carbonate, and aluminum hydroxide), flame retardants, defoamers, pigments, dyes, antioxidants, weathering agents, lubricants, and mold release agents.

The method for mixing the other polymer (β) into the hydrogenated polymer composition (α) of the present invention depends on, for example, the composition ratio of each component, and preparation can be performed by a usual method for mixing a polymer substance.

When the other polymer (β) is the thermoplastic polymer (β1), the resin composition of the present invention can be produced by, for example, a mixing apparatus such as an extruder, a mixing roll, a Banbury mixer, or a kneader. In particular, in the present invention, a preferred embodiment is a method of melt-kneading using the mixing apparatus.

When the other polymer (β) is the curable polymer (β2), the resin composition of the present invention can be produced by, for example, a method in which sufficient mixing with, for example, a mixer, next melt-kneading with, for example, a mixing roll, or an extruder, and then cooling and pulverizing are performed.

## Examples

Hereinafter, the present invention will be described in more detail with reference to examples, but the present invention is not limited to these examples. In the following examples and comparative examples, the physical properties of the hydrogenated polymer composition were evaluated by the methods below.

(1) Weight average molecular weight (Mw), number average molecular weight (Mn), and molecular weight distribution (Mw/Mn)

The weight average molecular weight (Mw), the number average molecular weight (Mn), and the molecular weight distribution (Mw/Mn) of the polymer were measured by the gel permeation chromatography (GPC) relative to standard polystyrenes.

Apparatus: GPC system "HLC-8220" manufactured by Tosoh Corporation
Separation column: "TSKgel SuperMultiporeHZ-M (Column diameter = 4.6 mm, column length = 15 cm)" manufactured by Tosoh Corporation (two columns were connected in series and used)
Eluent: tetrahydrofuran
Eluent flow rate: 0.35 mL/min
Column temperature: 40°C
Detection method: differential refractive index (RI)
Injection amount: 10 μL
Concentration: 1 mg/1 mL (polymer/THF)

(2) Vinyl content, hydrogenation rate

The vinyl contents of the hydrogenated conjugated diene modified polymer and the polymer at each stage of production thereof were calculated using $^1$H-NMR. Incidentally, the vinyl content is a value calculated for the unhydrogenated polymer before the hydrogenation reaction, and the vinyl content was calculated from the area ratio of the signal

of the double bond derived from the vinylated conjugated diene unit and the signal of the double bond derived from the unvinylated conjugated diene unit, in the obtained spectrum. In addition, since the signal derived from the double bond derived from the conjugated diene unit decreases after hydrogenation, the hydrogenation rate was calculated by comparing the area ratio of the signal derived from the double bond derived from the conjugated diene unit in the polymer before hydrogenation and an appropriate signal (for example, signal of aromatic ring derived from styrene, or signal of terminal methyl derived from the initiator) that was not changed by hydrogenation with the area ratio of the same signals in the polymer after hydrogenation.

Apparatus: nuclear magnetic resonance spectrometer "JNM-ECX 400" manufactured by JEOL Ltd.
Solvent: deuterated chloroform
Measurement temperature: 50°C
Number of scans: 1024 times

(3) Boron-containing functional group introduction rate (% by mass)

The introduction rate of the boron-containing functional group to the polymer terminal by reaction of the boric acid compound and the reactive terminal polymer (boron-containing functional group introduction rate) was calculated from the boron atom content by high-frequency inductively coupled plasma (ICP) optical emission spectroscopy analysis and the component ratio of the polymer components by GPC measurement. The analysis and the measurement were performed after the polymer composition obtained in, for example, each of the following examples, from which the unreacted boric acid compound was removed by washing with water, was decomposed by a microwave decomposition apparatus. The boron-containing functional group introduction rate is determined from the sum of the boronic acid-based hydrogenated conjugated diene modified polymer (A) and the borinic acid-based hydrogenated conjugated diene modified polymer (B) obtained by subtracting the mass of the unmodified product from the total mass of the polymer composition obtained in, for example, each example.

<Microwave decomposition>

Apparatus: ETHOS UP manufactured by MILESTONE Srl
Solvent: nitric acid
Decomposition temperature: 210°C
Decomposition time: 30 minutes

<ICP optical emission spectroscopy analysis>
Apparatus: iCAP 7400 Duo manufactured by Thermo Fisher Scientific Inc.

(4) Content (% by mass) of boronic acid-based hydrogenated conjugated diene modified polymer (A) and borinic acid-based hydrogenated conjugated diene modified polymer (B) in polymer composition

In the polymer composition obtained in, for example, each of the following examples, the borinic acid-based hydrogenated conjugated diene modified polymer (B) has a molecular weight larger than that of the boronic acid-based hydrogenated conjugated diene modified polymer (A) and that of the unmodified polymer which is not modified with the boric acid compound. In addition, the molecular weights of the boronic acid-based hydrogenated conjugated diene modified polymer (A) and the unmodified polymer are the same.

From these, first, the content (% by mass) of the borinic acid-based hydrogenated conjugated diene modified polymer (B) and the total content (% by mass) of the boronic acid-based hydrogenated conjugated diene modified polymer (A) and the unmodified polymer, in the polymer composition were each calculated from the area ratio obtained by GPC.

Thereafter, the content of the boronic acid-based hydrogenated conjugated diene modified polymer (A) in the polymer composition was calculated as follows from the boron-containing functional group introduction rate obtained as described above and the content obtained from the result of GPC described above.

$$(\text{Content (\% by mass) of boronic acid-based hydrogenated conjugated diene modified polymer (A)}) = (\text{boron-containing functional group introduction rate (\% by mass)}) - (\text{content (\% by mass) of borinic acid-based hydrogenated conjugated diene modified polymer (B)})$$

(5) Reactivity

The reactivity of the boron-containing functional group of the hydrogenated conjugated diene modified polymer obtained in, for example, each example was evaluated according to the following index from the change in signals by $^1$H-NMR when catechol was added to the deuterated solvent solution of the polymer in an equimolar amount to the initiating terminal of the polymer in step (1) of each example or comparative example. The amount of the initiating terminal of the polymer was calculated from the integration ratio of the alkyl group derived from alkyllithium and the integration ratio of the signals of the double bond derived from the conjugated diene unit, from the polymer before hydrogenation, by $^1$H-NMR.

A: the amount of catechol with shifted signals is 70 mol% or more
B: the amount of catechol with shifted signals is 50 mol% or more and less than 70 mol%
C: the amount of catechol with shifted signals is 25 mol% or more and less than 50 mol%
D: the amount of catechol with shifted signals is less than 25 mol%

(6) Dispersibility

The dispersibility of the polymer obtained in, for example, each example in a thermoplastic polymer was evaluated as follows. As the thermoplastic polymer, a vinyl alcohol-based polymer was used.

For the dispersibility in the vinyl alcohol-based polymer, a resin composition obtained by kneading 5 parts by mass of a hydrogenated polymer composition with 95 parts by mass of an ethylene-vinyl alcohol copolymer having an ethylene unit content of 32 mol% and a degree of saponification of 99.9 mol% using Labo Plastomill (device name: 4M150, manufactured by Toyo Seiki Seisaku-sho, Ltd.) under conditions of 200°C, 10 minutes, and 100 rpm was pressed at 200°C to obtain a film having a thickness of 125 μm, and then the dispersion diameter of the dispersed domain in the cross section was observed with an optical microscope. The evaluation was performed according to the following indexes.

A: the largest dispersion domain in the cross section has a diameter of less than 3 um
B: the largest dispersion domain in the cross section has a diameter of 3 um or more and less than 5 um
C: the largest dispersion domain in the cross section has a diameter of 5 um or more and less than 7 um
D: the largest dispersion domain in the cross section has a diameter of 7 um or more

(7) Taft's steric parameter Es value

The Taft's steric parameter Es value of the organic group bonded to the oxygen atom in each boric acid compound used in the following examples and comparative examples was calculated by the method described in Description of Embodiments.

[Example 1]

(Step (1))

A sufficiently dried 5 L autoclave was purged with nitrogen, and charged with 606 g of cyclohexane, 4.51 g of tetrahydrofuran, and 5.40 g of sec-butyllithium (1.3 M cyclohexane solution), the temperature was raised to 50°C, and then 140 g of butadiene was sequentially added at 10 mL/min while the polymerization temperature was controlled to 50°C under stirring conditions. The polymerization was completed by heating for 1 hour after addition of butadiene, and a polymerization liquid containing a butadiene polymer having a reactive terminal was obtained.

(Step (2))

Triisopropyl borate, 1.69 g, was added to the polymerization liquid obtained in the step (1) to introduce boronic acid to the polymerization terminal of the butadiene polymer, and a liquid containing a polymer composition was obtained. The vinyl content of the resulting polymer composition was 47 mol%.

(Step (3))

To the liquid containing the polymer composition obtained in the step (2), μ-chloro-μ-methylene [bis(cyclopentadienyl)titanium]dimethylaluminum (Tebbe catalyst) as a hydrogenation catalyst was added in an amount of 0.0001 mol% as the amount of Ti in the hydrogenation catalyst with respect to carbon-carbon double bonds contained in butadiene units of all polymers contained in the polymer composition, and hydrogenation reaction was performed at 85°C under a hydrogen pressure of 1 MPa until the hydrogenation rate reached 96 mol%. The liquid containing the resulting hydrogenated polymer composition was added to a 5-fold amount of methanol to precipitate polymer components, and then the precipitates were collected and dried. The terminal functional group introduction rate of the resulting hydrogenated polymer composition was 90% by mass. In the resulting hydrogenated polymer composition, the content of the boronic acid-based hydrogenated conjugated diene modified polymer (A) was 86% by mass, the content of the borinic acid-based hydrogenated conjugated diene modified polymer (B) was 4% by mass, the weight average molecular weight of the boronic acid-based hydrogenated conjugated diene modified polymer (A) was 30,000, and Mw/Mn was 1.05.

[Example 2]

(Step (1))

A sufficiently dried 5 L autoclave was purged with nitrogen, and charged with 606 g of cyclohexane, 5.40 g of sec-butyllithium (1.3 M cyclohexane solution), and 0.65 g of tetramethylethylenediamine (TMEDA), the temperature was raised to 40°C, and then 140 g of butadiene was sequentially added at 10 mL/min while the polymerization temperature was controlled to 40°C under stirring conditions. The polymerization was completed by heating for 1 hour after addition of butadiene, and a polymerization liquid containing a butadiene polymer having a reactive terminal was obtained.

(Step (2))

Triisopropyl borate, 1.69 g, was added to the polymerization liquid obtained in the step (1) to introduce boronic acid to the polymerization terminal of the butadiene polymer, and a liquid containing a polymer composition was obtained. The vinyl content of the resulting polymer composition was 75 mol%.

(Step (3))

To the liquid containing the polymer composition obtained in the step (2), a Tebbe catalyst as a hydrogenation catalyst was added in an amount of 0.0001 mol% as the amount of Ti in the hydrogenation catalyst with respect to carbon-carbon double bonds contained in butadiene units of all polymers contained in the polymer composition, and hydrogenation reaction was performed at 85°C under a hydrogen pressure of 1 MPa until the hydrogenation rate reached 96 mol%. The liquid containing the resulting hydrogenated polymer composition was added to a 5-fold amount of methanol to precipitate polymer components, and then the precipitates were collected and dried. The terminal functional group introduction rate of the resulting hydrogenated polymer composition was 90% by mass. In the resulting hydrogenated polymer composition, the content of the boronic acid-based hydrogenated conjugated diene modified polymer (A) was 88% by mass, the content of the borinic acid-based hydrogenated conjugated diene modified polymer (B) was 2% by mass, the weight average molecular weight of the boronic acid-based hydrogenated conjugated diene modified polymer (A) was 30,000, and Mw/Mn was 1.04.

[Example 3]

(Step (1))

A sufficiently dried 5 L autoclave was purged with nitrogen, and charged with 606 g of cyclohexane, 5.40 g of sec-butyllithium (1.3 M cyclohexane solution), and 0.65 g of tetramethylethylenediamine (TMEDA), the temperature was raised to 40°C, and then 140 g of butadiene was sequentially added at 10 mL/min while the polymerization temperature was controlled to 40°C under stirring conditions. The polymerization was completed by heating for 1 hour after addition

of butadiene, and a polymerization liquid containing a butadiene polymer having a reactive terminal was obtained.

(Step (2))

A mixture of 0.65 g of TMEDA and 1.69 g of triisopropyl borate was added to the polymerization liquid obtained in the step (1) to introduce boronic acid to the polymerization terminal of the butadiene polymer, and a liquid containing a polymer composition was obtained. The vinyl content of the resulting polymer composition was 75 mol%.

(Step (3))

To the liquid containing the polymer composition obtained in the step (2), a Tebbe catalyst as a hydrogenation catalyst was added in an amount of 0.0001 mol% as the amount of Ti in the hydrogenation catalyst with respect to carbon-carbon double bonds contained in butadiene units of all polymers contained in the polymer composition, and hydrogenation reaction was performed at 85°C under a hydrogen pressure of 1 MPa until the hydrogenation rate reached 96 mol%. The liquid containing the resulting hydrogenated polymer composition was added to a 5-fold amount of methanol to precipitate polymer components, and then the precipitates were collected and dried. The terminal functional group introduction rate of the resulting hydrogenated polymer composition was 98% by mass. In the resulting hydrogenated polymer composition, the content of the boronic acid-based hydrogenated conjugated diene modified polymer (A) was 95% by mass, the content of the borinic acid-based hydrogenated conjugated diene modified polymer (B) was 3% by mass, the weight average molecular weight of the boronic acid-based hydrogenated conjugated diene modified polymer (A) was 30,000, and Mw/Mn was 1.04.

[Example 4]

A hydrogenated polymer composition containing a hydrogenated conjugated diene modified polymer was obtained in the same manner as in Example 3 except that the kind and addition amount of the compound in each step were changed as shown in Table 1.

[Example 5]

A hydrogenated polymer composition containing a hydrogenated conjugated diene modified polymer was obtained in the same manner as in Example 1 except that the kind and addition amount of the compound in each step were changed as shown in Table 1.

[Example 6]

(Step (1))

A sufficiently dried 5 L autoclave was purged with nitrogen, and charged with 606 g of cyclohexane and 4.19 g of sec-butyllithium (1.3 M cyclohexane solution), the temperature was raised to 50°C, and then 137 g of isoprene was sequentially added at 10 mL/min while the polymerization temperature was controlled to 50°C under stirring conditions. The polymerization was completed by heating for 1 hour after addition of isoprene, and a polymerization liquid containing an isoprene polymer having a reactive terminal was obtained.

(Step (2))

Triisopropyl borate, 1.31 g, was added to the polymerization liquid obtained in the step (1) to introduce boronic acid to the polymerization terminal of the isoprene polymer, and a liquid containing a polymer composition was obtained. The vinyl content of the resulting polymer composition was 8 mol%.

(Step (3))

To the liquid containing the polymer composition obtained in the step (2), a Ziegler-type hydrogenation catalyst formed of nickel octylate and triethylaluminum as a hydrogenation catalyst was added in an amount of 0.1 mol% as the amount of Ni in the hydrogenation catalyst with respect to carbon-carbon double bonds contained in isoprene units of all polymers contained in the polymer composition, and hydrogenation reaction was performed at 85°C under a hydrogen pressure of 1 MPa until the hydrogenation rate reached 96 mol%. The liquid containing the resulting hydrogenated polymer composition was added to a 5-fold amount of methanol to precipitate polymer components, and then the precipitates were collected and dried. The terminal functional group introduction rate of the resulting hydrogenated polymer composition was 85% by mass. In the resulting hydrogenated polymer composition, the content of the boronic acid-based hydrogenated conjugated diene modified polymer (A) was 73% by mass, the content of the borinic acid-based hydrogenated conjugated diene modified polymer (B) was 12% by mass, the weight average molecular weight of the boronic acid-based hydrogenated conjugated diene modified polymer (A) was 30,000, and Mw/Mn was 1.05.

[Example 7]

(Step (1))

A sufficiently dried 5 L autoclave was purged with nitrogen, and charged with 606 g of cyclohexane, 4.49 g of sec-butyllithium (1.3 M cyclohexane solution), and 0.54 g of TMEDA, the temperature was raised to 50°C, and then 93 g of butadiene was sequentially added at 10 mL/min while the polymerization temperature was controlled to 50°C under stirring conditions. The mixture was heated for 1 hour after the addition of butadiene, and subsequently 30 g of isoprene was sequentially added at 10 mL/min. The polymerization was completed by heating for 1 hour after addition of isoprene, and a polymerization liquid containing a block copolymer which was composed of a butadiene polymer block-isoprene polymer block and had a reactive terminal was obtained.

(Step (2))

A mixture of 0.54 g of TMEDA and 1.41 g of triisopropyl borate was added to the polymerization liquid obtained in the step (1) to introduce boronic acid to the polymerization terminal of the isoprene polymer block, and a liquid containing a polymer composition was obtained. The vinyl content in the resulting whole polymer composition was 69 mol%.

(Step (3))

To the liquid containing the polymer composition obtained in the step (2), a Ziegler-type hydrogenation catalyst formed of nickel octylate and triethylaluminum as a hydrogenation catalyst was added in an amount of 0.1 mol% as the amount of Ni in the hydrogenation catalyst with respect to carbon-carbon double bonds contained in butadiene units and isoprene units of all polymers contained in the polymer composition, and hydrogenation reaction was performed at 85°C under a hydrogen pressure of 1 MPa until the hydrogenation rate reached 96 mol%. The liquid containing the resulting hydrogenated polymer composition was added to a 5-fold amount of methanol to precipitate polymer components, and then the precipitates were collected and dried. The terminal functional group introduction rate of the resulting hydrogenated polymer composition was 95% by mass. In the resulting hydrogenated polymer composition, the content of the boronic acid-based hydrogenated conjugated diene modified polymer (A) was 83% by mass, the content of the borinic acid-based hydrogenated conjugated diene modified polymer (B) was 12% by mass, the weight average molecular weight of the boronic acid-based hydrogenated conjugated diene modified polymer (A) was 30,000, and Mw/Mn was 1.05.

[Example 8]

(Step (1))

A sufficiently dried 5 L autoclave was purged with nitrogen, and charged with 606 g of cyclohexane, 3.30 g of sec-butyllithium (1.3 M cyclohexane solution), and 0.39 g of TMEDA, the temperature was raised to 40°C, and then 47 g of butadiene was sequentially added at 10 mL/min while the polymerization temperature was controlled to 40°C under stirring conditions. The mixture was heated for 1 hour after the addition of butadiene, and subsequently 74 g of styrene was sequentially added at 10 mL/min. The polymerization was completed by heating for 1 hour after addition of styrene, and a polymerization liquid containing a block copolymer which was composed of a butadiene polymer block-styrene polymer block and had a reactive terminal was obtained.

(Step (2))

A mixture of 0.39 g of TMEDA and 1.03 g of triisopropyl borate was added to the polymerization liquid obtained in the step (1) to introduce boronic acid to the polymerization terminal of the styrene polymer block. The vinyl content of the resulting polymer composition was 76 mol%.

(Step (3))

To the liquid containing the polymer composition obtained in the step (2), a Tebbe catalyst as a hydrogenation catalyst was added in an amount of 0.0001 mol% as the amount of Ti in the hydrogenation catalyst with respect to carbon-carbon double bonds contained in butadiene units of all polymers contained in the polymer composition, and hydrogenation reaction was performed at 85°C under a hydrogen pressure of 1 MPa until the hydrogenation rate reached 96 mol%. The liquid containing the resulting hydrogenated polymer composition was added to a 5-fold amount of methanol to precipitate polymer components, and then the precipitates were collected and dried. The terminal functional group introduction rate of the resulting hydrogenated polymer composition was 95% by mass. In the resulting hydrogenated polymer composition, the content of the boronic acid-based hydrogenated conjugated diene modified polymer (A) was 85% by mass, the content of the borinic acid-based hydrogenated conjugated diene modified polymer (B) was 10% by mass, the weight average molecular weight of the boronic acid-based hydrogenated conjugated diene modified polymer (A) was 30,000, and Mw/Mn was 1.06.

[Comparative Example 1]

As shown in Table 1, a hydrogenated polymer composition containing a hydrogenated conjugated diene modified polymer was obtained in the same manner as in Example 1 except that 0.93 g of trimethyl borate was added instead of triisopropyl borate in the step (2).

[Comparative Example 2]

As shown in Table 1, a hydrogenated polymer composition was obtained in the same manner as in Example 1 except that the addition of the boric acid compound in the step (2) was not performed.

[Comparative Example 3]

As shown in Table 1, a hydrogenated polymer composition containing a hydrogenated conjugated diene modified polymer having a borinic acid introduced at the terminal was obtained in the same manner as in Example 1 except that 2.78 g of phenylboronic anhydride was added instead of triisopropyl borate in the step (2).

[Table 1]

| Unit: g | | Example | | | | | | | | Comparative example | | |
|---|---|---|---|---|---|---|---|---|---|---|---|---|
| | | 1 | 2 | 3 | 4 | 5 | 6 | 7 | 8 | 1 | 2 | 3 |
| Conjugated diene-based polymer | | (1) | (2) | (3) | (4) | (5) | (6) | (7) | (8) | (9) | (10) | (11) |
| Step (1) | Cyclohexane | 606 | 606 | 606 | 606 | 606 | 606 | 606 | 606 | 606 | 606 | 606 |
| | sec-Butyllithium | 5.40 | 5.40 | 5.40 | 30.00 | 5.40 | 4.19 | 4.49 | 3.30 | 5.40 | 5.40 | 5.40 |
| | Styrene | - | - | - | - | - | - | - | 74 | - | - | - |
| | Tetramethylethylenediamin e | - | 0.65 | 0.65 | - | - | - | 0.54 | 0.39 | - | - | - |
| | Tetrahydrofuran | 4.51 | - | - | 4.76 | 4.51 | - | - | - | 4.51 | 4.51 | 4.51 |
| | Butadiene | 140 | 140 | 140 | 157 | 140 | - | 93 | 47 | 140 | 140 | 140 |
| | Isoprene | - | - | - | - | - | 137 | 30 | - | - | - | - |
| Ste p (2) | Triisopropyl borate | 1.69 | 1.69 | 1.69 | 9.47 | - | 1.31 | 1.41 | 1.03 | - | - | - |
| | Tributyl borate | - | - | - | - | 2.07 | - | - | - | - | - | - |
| | Trimethyl borate | - | - | - | - | - | - | - | - | 0.93 | - | - |
| | Phenylboronic anhydride | - | - | - | - | - | - | - | - | - | 2.78 | 2.78 |
| | Tetramethylethylenediamin e | - | - | 0.65 | 3.61 | - | - | 0.54 | 0.39 | - | - | - |

Physical properties of the hydrogenated polymer compositions containing the hydrogenated conjugated diene polymers obtained in Examples 1 to 8 and Comparative Examples 1 to 3 are shown in Table 2.

[Table 2]

Table 2

| | Example 1 | | Example 2 | |
|---|---|---|---|---|
| Polymer composition | 1 | | 2 | |
| Polymer | (A) | (B) | (A) | (B) |
| Monomer | Butadiene | | Butadiene | |
| Weight average molecular weight | 30.000 | 60.000 | 30.000 | 60.000 |
| Mw/Mn | 1.05 | 1.05 | 1.04 | 1.04 |
| Vinyl content (mol%) | 47 | 47 | 75 | 75 |
| R | Isopropyl | | Isopropyl | |
| Es (steric parameter) | -0.47 | | -0.47 | |
| Content of polymer (A) in polymer composition (% by mass) | 86 | - | 88 | - |
| Content of polymer (B) in polymer composition (% by mass) | - | 4 | - | 2 |
| Boron-containing functional group introduction rate (% by mass) | 90 | | 90 | |
| Reactivity | A | | A | |
| Dispersibility | A | | A | |
| | Example 3 | | Example 4 | |
| Polymer composition | 3 | | 4 | |
| Polymer | (A) | (B) | (A) | (B) |
| Monomer | Butadiene | | Butadiene | |
| Weight average molecular weight | 30.000 | 60.000 | 6.000 | 12.000 |
| Mw/Mn | 1.04 | 1.04 | 1.04 | 1.04 |
| Vinyl content (mol%) | 75 | 75 | 50 | 50 |
| R | Isopropyl | | Isopropyl | |
| Es (steric parameter) | -0.47 | | -0.47 | |
| Content of polymer (A) in polymer composition (% by mass) | 95 | - | 92 | - |
| Content of polymer (B) in polymer composition (% by mass) | - | 3 | - | 3 |
| Boron-containing functional group introduction rate (% by mass) | 98 | | 95 | |
| Reactivity | A | | A | |
| Dispersibility | A | | A | |
| | Example 5 | | Example 6 | |
| Polymer composition | 5 | | 6 | |

(continued)

| | Example 5 | | Example 6 | | |
|---|---|---|---|---|---|
| Polymer | (A) | (B) | (A) | (B) | |
| Monomer | Butadiene | | Isoprene | | |
| Weight average molecular weight | 30.000 | 60.000 | 30.000 | 60.000 | |
| Mw/Mn | 1.04 | 1.04 | 1.05 | 1.05 | |
| Vinyl content (mol%) | 48 | 48 | 8 | 8 | |
| R | n-Butyl | | Isopropyl | | |
| Es (steric parameter) | -0.39 | | -0.47 | | |
| Content of polymer (A) in polymer composition (% by mass) | 73 | - | 73 | - | |
| Content of polymer (B) in polymer composition (% by mass) | - | 5 | - | 12 | |
| Boron-containing functional group introduction rate (% by mass) | 78 | | 85 | | |
| Reactivity | A | | A | | |
| Dispersibility | A | | A | | |
| | Example 7 | | Example 8 | | |
| Polymer composition | 7 | | 8 | | |
| Polymer | (A) | (B) | (A) | (B) | |
| Monomer | Butadiene/Isoprene | | Butadiene/Styrene | | |
| Weight average molecular weight | 30.000 | 60.000 | 30.000 | 60.000 | |
| Mw/Mn | 1.05 | 1.05 | 1.06 | 1.06 | |
| Vinyl content (mol%) | 69 | 69 | 76 | 76 | |
| R | Isopropyl | | Isopropyl | | |
| Es (steric parameter) | -0.47 | | -0.47 | | |
| Content of polymer (A) in polymer composition (% by mass) | 83 | - | 85 | - | |
| Content of polymer (B) in polymer composition (% by mass) | - | 12 | - | 10 | |
| Boron-containing functional group introduction rate (% by mass) | 95 | | 95 | | |
| Reactivity | A | | A | | |
| Dispersibility | A | | A | | |
| | Comparative example 1 | | Comparative example 2 | Comparative example 3 | |
| Polymer composition | 9 | | 10 | 11 | |
| Polymer | (A) | (B) | - | (A) | (B) |
| Monomer | Butadiene | | Butadiene | - | Butadiene |
| Weight average molecular weight | 30.000 | 60.000 | 30.000 | - | 30.000 |
| Mw/Mn | 1.06 | 1.06 | 1.05 | - | 1.05 |
| Vinyl content (mol%) | 47 | 47 | 48 | - | 50 |

(continued)

| | Comparative example 1 | | Comparative example 2 | Comparative example 3 | |
|---|---|---|---|---|---|
| R | Methyl | | - | - | - |
| Es (steric parameter) | 0 | | - | - | - |
| Content of polymer (A) in polymer composition (% by mass) | 20 | - | 0 | 0 | - |
| Content of polymer (B) in polymer composition (% by mass) | - | 1 | 0 | - | 86 |
| Boron-containing functional group introduction rate (% by mass) | 21 | | 0 | 86 | |
| Reactivity | C | | D | A | |
| Dispersibility | C | | D | B | |

Incidentally, R in Table 2 is an organic group bonded to an oxygen atom of the boric acid compound used in the step (1), and is R in Formula (I).

It is found from Table 2 that by reacting with a boric acid compound shown in each of Examples 1 to 8 having a substituent with a Taft's steric parameter Es value of -0.30 or less, a hydrogenated diene-based polymer which includes a hydrogenated conjugated diene modified polymer having a boron-containing functional group, and which has a high rate of introduction of a terminal functional group, excellent reactivity with polar functional groups, and excellent dispersibility in a thermoplastic polymer (vinyl alcohol-based polymer) can be obtained. On the other hand, in Comparative Example 1 in which a boric acid compound having a substituent with a Taft's steric parameter Es value of more than -0.30 was allowed to react, the introduction rate of a terminal functional group was low, and the reactivity and the dispersibility in a thermoplastic polymer (vinyl alcohol-based polymer) were poor. In Comparative Example 2 in which no boric acid compound was allowed to react, reaction with the polar functional group did not occur, and the dispersibility in a thermoplastic polymer (vinyl alcohol-based polymer) was also poor. Furthermore, in Comparative Example 3 containing only a borinic acid compound, the reactivity was excellent, but the dispersibility in a thermoplastic polymer (vinyl alcohol-based polymer) was poor, and it was difficult to achieve both the reactivity and the dispersibility in a thermoplastic polymer (vinyl alcohol-based polymer).

Industrial Applicability

By the production method of the present invention, the boronic acid-based hydrogenated conjugated diene modified polymer (A) suitable for, for example, modification of a polar material and dispersion of an inorganic material can be obtained in high yield. In addition, the hydrogenated polymer composition obtained in the present invention which contains the boronic acid-based hydrogenated conjugated diene modified polymer and the borinic acid-based hydrogenated conjugated diene modified polymer in a specific percentage has high reactivity with polar functional groups and excellent dispersibility in thermoplastic polymers, typically a vinyl alcohol-based polymer. Thus, the hydrogenated polymer composition of the present invention and the resin composition containing the polymer composition can be effectively used in a wide range of fields such as interior and exterior articles for automobiles, electrical and electronic parts, packaging materials, sporting goods, daily goods, laminating materials, stretchable materials, various rubber products, medical supplies, various adhesives, and various coating primers.

## Claims

**1.** A method for producing a hydrogenated polymer composition comprising a hydrogenated conjugated diene modified polymer that has a boron-containing functional group, the method comprising:

a step (1) of anionically polymerizing a monomer including a conjugated diene in a presence of a reactive metal or reactive metal compound capable of causing anionic polymerization to produce a reactive terminal polymer (Z);
a step (2) of reacting the reactive terminal polymer (Z) obtained in the step (1) with a boric acid compound that has at least two partial structures represented by Formula (I) :

B-O-R (I)

wherein B represents a boron atom, O represents an oxygen atom, and R represents an organic group, and in which at least one R bonded to an oxygen atom in the partial structure has a Taft's steric parameter Es value of -0.30 or less to obtain an unhydrogenated conjugated diene modified polymer having a boron-containing functional group; and

a step (3) of hydrogenating at least some of carbon-carbon double bonds contained in conjugated diene units included in the unhydrogenated conjugated diene modified polymer obtained in the step (2).

**2.** The method for producing a hydrogenated polymer composition according to claim 1, wherein the boric acid compound is mixed with a polar compound and then added to the reactive terminal polymer (Z) to be reacted, in the step (2).

**3.** A hydrogenated polymer composition comprising: 65 to 99% by mass of at least one boronic acid-based hydrogenated conjugated diene modified polymer (A) selected from the group consisting of a hydrogenated conjugated diene modified polymer containing a boronic acid group represented by Formula (II), a hydrogenated conjugated diene modified polymer containing a boronate ester group represented by Formula (III), and a hydrogenated conjugated diene modified polymer containing a boronic acid salt group represented by Formula (IV); and 1 to 35% by mass of at least one borinic acid-based hydrogenated conjugated diene modified polymer (B) selected from the group consisting of a hydrogenated conjugated diene modified polymer containing a borinic acid group represented by Formula (V) or (VI), a hydrogenated conjugated diene modified polymer containing a borinate ester group represented by Formula (VII) or (VIII), and a hydrogenated conjugated diene modified polymer containing a borinic acid salt group represented by Formula (IX) or (X):

[Chemical Formula 1]

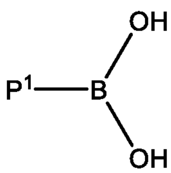 (II) 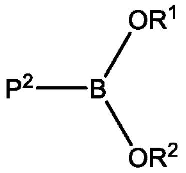 (III) 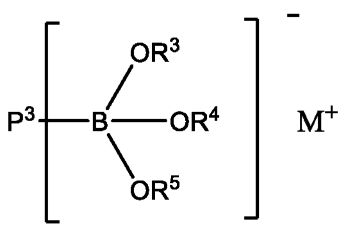 (IV)

wherein $P^1$, $P^2$, and $P^3$ each represent a polymer chain containing hydrogenated conjugated diene units, $R^1$ and $R^2$ each independently represent a hydrogen atom or an alkyl group having 1 to 12 carbon atoms, at least one of $R^1$ or $R^2$ represents an alkyl group having 1 to 12 carbon atoms, or $R^1$ and $R^2$ are bonded to form an alkylene chain having 2 to 24 carbon atoms, $R^3$, $R^4$, and $R^5$ each independently represent a hydrogen atom, an alkyl group having 1 to 12 carbon atoms, or a polymer chain containing hydrogenated conjugated diene units, at least one of $R^3$, $R^4$, or $R^5$ represents an alkyl group having 1 to 12 carbon atoms or a polymer chain containing hydrogenated conjugated diene units, or $R^3$ and $R^4$, $R^3$ and $R^5$, or $R^4$ and $R^5$ may be bonded to form an alkylene chain having 2 to 24 carbon atoms, or $R^3$, $R^4$, and $R^5$ may be bonded to form a trivalent saturated hydrocarbon chain having 3 to 36 carbon atoms, and M represents one alkali metal or 1/2 alkaline earth metal,

[Chemical Formula 2]

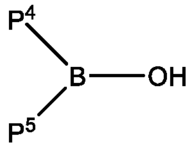

(V)

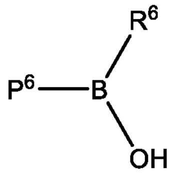

(VI)

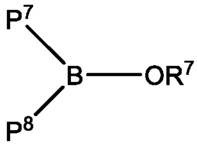

(VII)

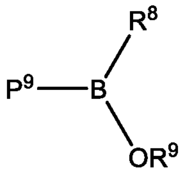

(VIII)

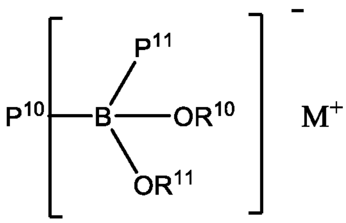

(IX)

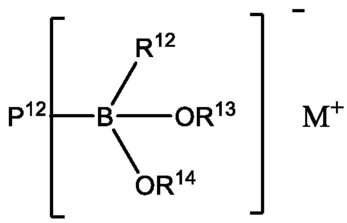

(X)

wherein $P^4$, $P^5$, $P^6$, $P^7$, $P^8$, $P^9$, $P^{10}$, $P^{11}$, and $P^{12}$ each represent a polymer chain containing hydrogenated conjugated diene units, $R^6$, $R^7$, $R^8$, and $R^9$ each independently represent an alkyl group having 1 to 12 carbon atoms, $R^{10}$ and $R^{11}$ each independently represent a hydrogen atom or an alkyl group having 1 to 12 carbon atoms, at least one of $R^{10}$ or $R^{11}$ represents an alkyl group having 1 to 12 carbon atoms, or $R^{10}$ and $R^{11}$ are bonded to form an alkylene chain having 2 to 24 carbon atoms, $R^{12}$ represents an alkyl group having 1 to 12 carbon atoms, $R^{13}$ and $R^{14}$ each independently represent a hydrogen atom or an alkyl group having 1 to 12 carbon atoms, at least one of $R^{13}$ or $R^{14}$ represents an alkyl group having 1 to 12 carbon atoms, or $R^{13}$ and $R^{14}$ are bonded to form an alkylene chain having 2 to 24 carbon atoms, and M represents one alkali metal or 1/2 alkaline earth metal.

4. A resin composition comprising a vinyl alcohol-based polymer and the hydrogenated polymer composition according to claim 3.

5. The resin composition according to claim 4, wherein the vinyl alcohol-based polymer is an ethylene-vinyl alcohol copolymer.

**INTERNATIONAL SEARCH REPORT**

International application No.
**PCT/JP2022/004954**

**A. CLASSIFICATION OF SUBJECT MATTER**

***C08C 19/26***(2006.01)i; ***C08C 19/02***(2006.01)i; ***C08L 15/00***(2006.01)i; ***C08L 29/04***(2006.01)i
FI: C08C19/26; C08C19/02; C08L15/00; C08L29/04

According to International Patent Classification (IPC) or to both national classification and IPC

**B. FIELDS SEARCHED**

Minimum documentation searched (classification system followed by classification symbols)

C08C19/00-19/44; C08F6/00-246/00; 301/00; C08L1/00-101/14; C08K3/00-13/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2006-176788 A (KURARAY CO., LTD.) 06 July 2006 (2006-07-06)<br>entire text | 1-5 |
| A | WO 2014/088092 A1 (YOKOHAMA RUBBER CO., LTD.) 12 June 2014 (2014-06-12)<br>entire text | 1-5 |
| A | JP 2017-137397 A (NITTO DENKO CORP.) 10 August 2017 (2017-08-10)<br>entire text | 1-5 |
| A | JP 07-025918 A (KURARAY CO., LTD.) 27 January 1995 (1995-01-27)<br>entire text | 1-5 |
| A | US 2009/0326161 A1 (BRIDGESTONE AMERICAS, INC.) 31 December 2009 (2009-12-31)<br>entire text | 1-5 |
| E, A | WO 2022/044633 A1 (KURARAY CO., LTD.) 03 March 2022 (2022-03-03)<br>entire text | 1-5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 April 2022** | **26 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/004954**

| Patent document cited in search report | Publication date (day/month/year) | Patent family member(s) | Publication date (day/month/year) |
|---|---|---|---|
| JP 2006-176788 A | 06 July 2006 | JP 2002-308932 A<br>US 2004/0220366 A1<br>entire text<br>US 2005/0215711 A1<br>WO 2002/060961 A1<br>EP 1369438 A1<br>CN 1460112 A<br>KR 10-0830357 B1 | |
| WO 2014/088092 A1 | 12 June 2014 | US 2015/0315324 A1<br>entire text<br>CN 105051081 A | |
| JP 2017-137397 A | 10 August 2017 | US 2019/0031794 A1<br>entire text<br>WO 2017/135121 A1<br>TW 201741382 A<br>CN 108473606 A<br>KR 10-2018-0104286 A | |
| JP 07-025918 A | 27 January 1995 | US 5466748 A<br>entire text<br>US 5571871 A<br>US 5741870 A<br>EP 616010 A2 | |
| US 2009/0326161 A1 | 31 December 2009 | US 7598322 B1<br>entire text | |
| WO 2022/044633 A1 | 03 March 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H0725918 A

### Non-patent literature cited in the description

- *Tetrahedron,* 1978, vol. 34, 3553-3562